# EUROPEAN PATENT APPLICATION

(11) **EP 4 797 845 A1**
(43) Date of publication of application: **26.08.2026**
(21) Application number: 24916138.1
(22) Date of filing: 14.01.2024
(51) Int. Cl.: H04W 72/23

(54) **WIRELESS COMMUNICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: Taor, Simon Edward William
(86) International application number: PCT/CN2024/072206
(87) International publication number: WO 2025/148074

(57) **Abstract**

A wireless communication method and apparatus, a device, and a storage medium, relating to the technical field of communications. The method comprises: a terminal device receives first information, the first information comprising a first indication field, and the first indication field being used for indicating a frequency domain resource occupied by at least one physical channel transmission (510), wherein at least one physical channel occupies a first type of time domain resource and/or a second type of time domain resource. According to the method, the frequency domain resource occupied by the at least one physical channel transmission is indicated by means of the first information. Furthermore, when the at least one physical channel occupies the first type and second type of time domain resources, by means of the method, the frequency domain resource occupied by the physical channel transmission in two different types of time domain resources can be indicated by means of one piece of indication information.

## Description

### TECHNICAL FIELD

Embodiments of the present application relate to the field of communication technology, and in particular to a wireless communication method and apparatus, a device and a storage medium.

### BACKGROUND

Currently, a network device is supported to simultaneously transmit and receive data on different subbands of the same time domain unit (for example, a subframe, a slot, or a symbol) in a wireless communication system.

The above technology introduces different types of time domain resources for the wireless communication system. In this scenario, how to indicate a frequency domain resource occupied by a physical channel transmission is a problem that needs to be considered.

### SUMMARY

Embodiments of the present disclosure provides a wireless communication method and apparatus, a device and a storage medium. The technical solutions are as follows.

According to an aspect of the embodiments of the present disclosure, there is provided a wireless communication method performed by a terminal device. The method includes the following operation.

First information is received. The first information includes a first indication field for indicating a frequency domain resource occupied by at least one physical channel transmission. The at least one physical channel occupies a first type of time domain resource and/or a second type of time domain resource.

According to an aspect of the embodiments of the present disclosure, there is provided a wireless communication method performed by a network device. The method includes the following operation.

First information is transmitted. The first information includes a first indication field for indicating a frequency domain resource occupied by at least one physical channel transmission. The at least one physical channel occupies a first type of time domain resource and/or a second type of time domain resource.

According to an aspect of the embodiments of the present disclosure, there is provided an apparatus for wireless communication. The apparatus includes a receiving module.

The receiving module is configured to receive first information. The first information includes a first indication field for indicating a frequency domain resource occupied by at least one physical channel transmission. The at least one physical channel occupies a first type of time domain resource and/or a second type of time domain resource.

According to an aspect of the embodiments of the present disclosure, there is provided an apparatus for wireless communication. The apparatus includes a transmitting module.

The transmitting module is configured to transmit first information. The first information includes a first indication field for indicating a frequency domain resource occupied by at least one physical channel transmission. The at least one physical channel occupies a first type of time domain resource and/or a second type of time domain resource.

According to an aspect of the embodiments of the present disclosure, there is provided a communication device. The communication device includes a processor and a memory for storing a computer program. The processor executes the computer program to implement the wireless communication method on the terminal device side or the wireless communication method on the network device side.

According to an aspect of the embodiments of the present disclosure, there is provided a computer-readable storage medium having a computer program stored thereon. The computer program is executed by a processor to implement the wireless communication method on the terminal device side or the wireless communication method on the network device side.

According to an aspect of the embodiments of the present disclosure, there is provided a chip. The chip includes programmable logic circuitry and/or program instructions, and when the chip is running, the chip is configured to implement the wireless communication method on the terminal device side or the wireless communication method on the network device side.

According to an aspect of the embodiments of the present disclosure, there is provided a computer program product. The computer program product includes computer instructions stored in a computer-readable storage medium, and a processor reads and executes the computer instructions from the computer-readable storage medium to implement the wireless communication method on the terminal device side or the wireless communication method on the network device side.

The technical solutions provided by the embodiments of the present disclosure may include the following beneficial effects.

A terminal device receives first information, a first indication field in the first information indicates a frequency domain resource occupied by at least one physical channel transmission, and the at least one physical channel occupies the first type of time domain resource and/or the second type of time domain resource. This achieves indication of the frequency domain resource occupied by the at least one physical channel transmission by the first information. Further, in a case that at least one physical channel occupies the first type and the second type of time domain resources, by using the above method, frequency domain resources occupied by the physical channel transmissions in the two different types of time domain resources can be indicated by one indication information (that is, the first information).

### BRIEF DESCRIPTION OF THE DRAWINGS

FIG. 1 is a schematic diagram of a network architecture according to an embodiment of the present disclosure.
FIG. 2 is a schematic diagram of cross division duplex technology according to an embodiment of the present disclosure.
FIG. 3 is a schematic diagram of different types of time domain resources according to an embodiment of the present disclosure.
FIG. 4 is a schematic diagram of a frequency domain resource allocation type according to an embodiment of the present disclosure.
FIG. 5 is a flowchart of a wireless communication method according to an embodiment of the present disclosure.
FIG. 6 is a schematic diagram of frequency domain resource offsets corresponding to different types of time domain resources according to an embodiment of the present disclosure.
FIG. 7 is a schematic diagram of frequency domain resource offsets corresponding to different types of time domain resources according to another embodiment of the present disclosure.
FIG. 8 is a flowchart of a wireless communication method according to another embodiment of the present disclosure.
FIG. 9 is a block diagram of a wireless communication apparatus according to an embodiment of the present disclosure.
FIG. 10 is a block diagram of a wireless communication apparatus according to another embodiment of the present disclosure.
FIG. 11 is a schematic structural diagram of a terminal device according to an embodiment of the present disclosure.
FIG. 12 is a schematic structural diagram of a network device according to an embodiment of the present disclosure.

### DETAILED DESCRIPTION

In order to make the objectives, technical solutions and advantages of the present disclosure clearer, the following further describes embodiments of the present disclosure in detail with reference to the accompanying drawings.

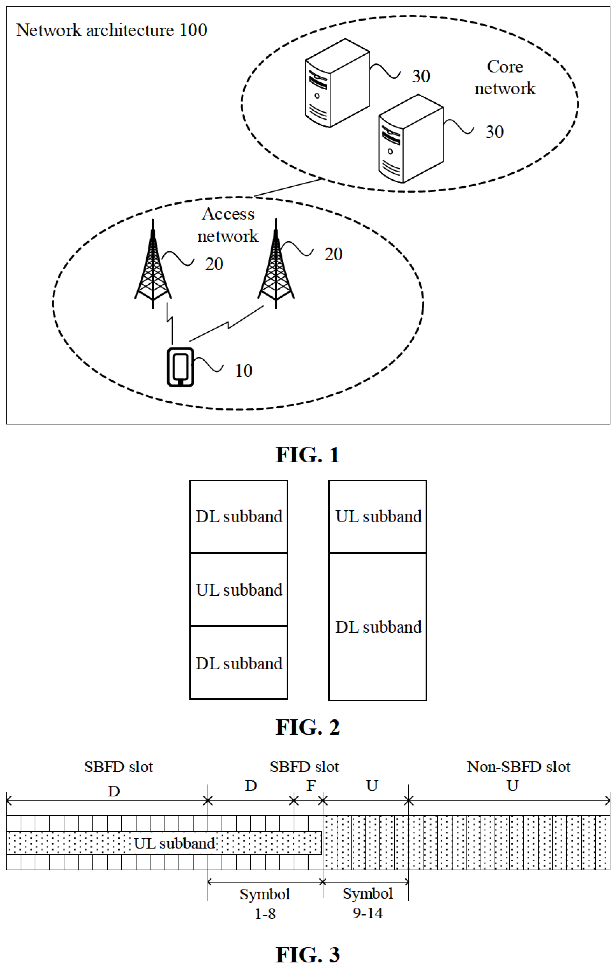

FIG. 1 illustrates a schematic diagram of a network architecture 100 according to an embodiment of the present disclosure. The network architecture 100 may include a terminal device 10, an access network device 20, and a core network element 30.

The terminal device 10 may be referred to as a user equipment (UE), an access terminal, a subscriber unit, a subscriber station, a mobile station, a mobile radio station, a remote station, a remote terminal, a mobile device, a wireless communication device, a user agent, or a user device. In some embodiments, the terminal device 10 may also be a cellular telephone, a cordless telephone, a Session Initiation Protocol (SIP) telephone, a Wireless Local Loop (WLL) station, a Personal Digital Assistant (PDA), a handheld device having a wireless communication function, a computing device or other processing device connected to a wireless modem, a vehicle-mounted device, a wearable device, a terminal device in the 5th Generation System (5GS) or a terminal device in a future evolution Public Land Mobile Network (PLMN), etc., which is not limited in the embodiments of the present disclosure. For convenience of description, the above-mentioned devices are collectively referred to as terminal devices. There are usually multiple terminal devices 10, and one or more terminal devices 10 may be distributed in a cell managed by each access network device 20. The terminal device may also be simply referred to as a terminal or a UE, and the meaning thereof can be understood by those skilled in the art.

The access network device 20 is a device deployed in an access network for providing a wireless communication function for the terminal device 10. The access network device 20 may include various forms of macro base stations, micro base stations, relay stations, access points, and the like. In systems employing different wireless access technologies, devices having access network device functions may be given different names. For example, such a device may be referred to as a gNodeB or gNB in a 5th Generation (5G) new radio (NR) system. The name "access network device" may change as communication technologies evolve. For ease of description, in the embodiments of the present disclosure, the above devices providing a wireless communication function to the terminal device 10 may be collectively referred to as access network devices. In some embodiments, communication between the terminal device 10 and the core network element 30 may be established through the access network device 20. Exemplarily, in a long term evolution (LTE) system, the access network device 20 may be an evolved universal terrestrial radio access network (EUTRAN) or one or more eNodeBs in the EUTRAN; and in a 5G NR system, the access network device 20 may be a radio access network (RAN) or one or more gNBs in the RAN. In the embodiments of the present disclosure, the "network device" refers to the access network device 20, such as a base station, unless otherwise specified.

The core network element 30 is a network element deployed in the core network. The core network element 30 mainly serves to provide user connection, manage users and carry services, and serve as an interface between the bearer network and the external network. For example, a core network element in a 5G NR system may include network elements such as an access and mobility management function (AMF) entity, a user plane function (UPF) entity, and a session management function (SMF) entity, etc.

In some embodiments, the access network device 20 and the core network element 30 communicate with each other through some air interface technology, such as an NG interface in a 5G NR system. The access network device 20 and the terminal device 10 communicate with each other through some air interface technology, such as a Uu interface.

The "5G NR system" in the embodiments of the present disclosure may also be referred to as a 5G system or an NR system, but those skilled in the art can understand the meaning thereof. The technical solutions described in the embodiments of the present disclosure may be applicable to an LTE System, a 5G NR System, a subsequent evolution System of the 5G NR System (for example, a Beyond 5G (B5G) System, a 6th Generation (6G) System, or other communication systems such as a Narrow Band Internet of Things (NB-IoT) System, which is not limited in the present disclosure.

In the embodiments of the present disclosure, the network device may provide services for a cell, and the terminal device communicates with the network device through transmission resources (for example, frequency domain resources, or frequency spectrum resources) on a carrier wave used by the cell. The cell may be a cell corresponding to the network device (for example, a base station), and the cell may belong to a macro base station or a base station corresponding to a Small cell. The Small cell here may include a Metro cell, a Micro cell, a Pico cell, a Femto cell, and the like. These Small cells have the characteristics of small coverage and low transmission power, and are suitable for providing high-speed data transmission services.

Before introducing the technical solutions of the present disclosure, some related technical knowledge related to the present disclosure will be described. The following related technologies as alternative solutions can be arbitrarily combined with the technical solutions of the embodiments of the present disclosure, and shall fall within the scope of protection of the embodiments of the present disclosure. The embodiments of the present disclosure include at least part of the following contents.

### 1. SBFD (Subband non-overlapping Full Duplex)

To address the issues of weak uplink coverage, large uplink latency, and insufficient uplink capacity caused by limited uplink resource allocation in NR Time Division Duplexing (TDD), the 3rd Generation Partnership Project (3GPP) has introduced the cross division duplex (XDD) technology, i.e., data can be transmitted and received simultaneously on different subbands of the same subframe/slot/symbol. This technology is mainly applied at the base station side, and the terminal side maintains the current state, i.e., supporting only transmission or reception of data within one subframe/slot/symbol. As illustrated in FIG. 2, an intermediate subband of one downlink or flexible subframe/slot/symbol is configured as an uplink subband.

The introduction of XDD technology naturally brings two symbol types. Taking uplink as an example, the symbol types are divided into full-uplink symbols, i.e., non-SBFD symbols, and uplink transmission resources in a downlink or flexible time domain unit, i.e., SBFD symbols. Taking FIG. 3 as an example, in the middle slot, symbols 1-8 are SBFD symbols, the effective uplink transmission bandwidth of which is narrow and equal to the bandwidth of an uplink subband, and symbols 9-14 are non-SBFD symbols (full-uplink symbols), the effective uplink transmission bandwidth of which is wide and equal to the bandwidth of the entire active Bandwidth Part (BWP). Similarly, the above division of symbol types can also serve as division of slot types, that is, some slots are SBFD slots, and some slots are non-SBFD slots (full-uplink slots).

The current SBFD scheme has the following conclusions: SBFD operates within a TDD carrier, an SBFD scheme is designed within a single uplink and downlink BWP (Bandwidth Part) pair with aligned center frequency points, and within a TDD carrier, there is at most one uplink subband on one SBFD symbol, where the uplink subband may be located in the middle or on both sides of the TDD carrier.

In summary, for uplink/downlink repetition transmission, there will be a situation of cross-multi-symbol types. Two options, i.e., option 1 and option 2, may be set. Option 1 restricts uplink transmission/downlink reception to the same type of symbols only through configuration/scheduling of a base station. Take PUSCH repetition (Physical Uplink Shared Channel repetition) as an example, if option 1 is selected, PUSCH resources can only be allocated within a UL subband, which will lead to fragmentation of uplink resources in full-uplink symbols. Therefore, option 2 may be considered, i.e., each PUSCH transmission is limited to one symbol type, and different PUSCH repetitions may be in different symbol types.

### 2. FDRA (Frequency domain resource assignment)

Both NR uplink and downlink support two types of frequency domain resource allocation: Type 0 frequency domain resource allocation and Type 1 frequency domain resource allocation. The network side configures the type of frequency domain resource allocation used by the terminal through a high layer parameter resourceAllocation, and resource allocation Type0, resource allocation Type 1, or dynamic switch may be configured for the terminal. When the configuration parameter is "dynamicswitch", the network side indicates the type of frequency domain resource allocation used by the terminal through the FDRA field in downlink control information (DCI).

### Resource allocation Type0:

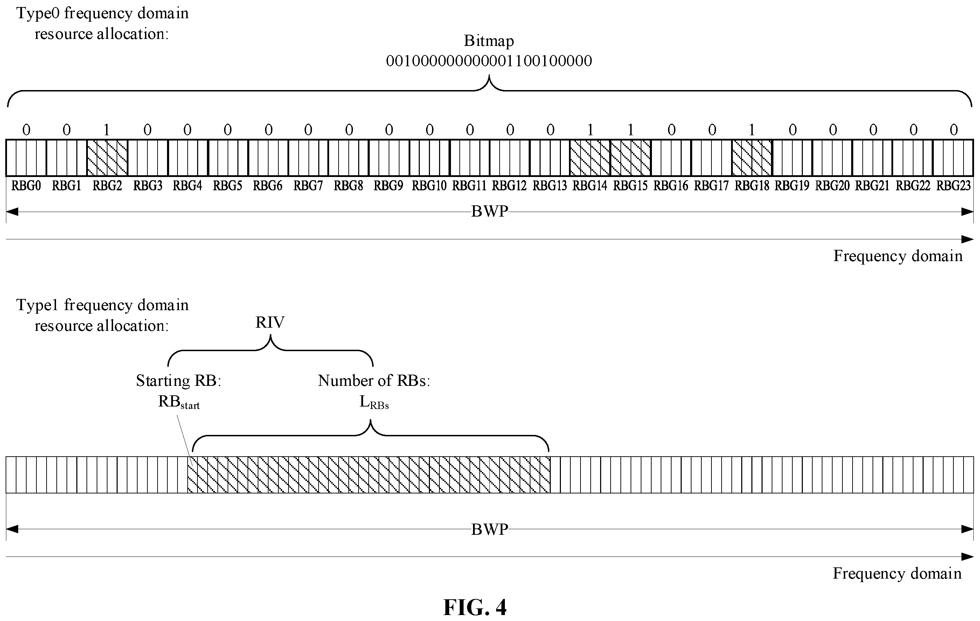

As illustrated in FIG. 4, the granularity of Type0 frequency domain resource allocation is resource block group (RBG), and RBG is a combination of a series of consecutive virtual resource blocks (RBs). The number of virtual RBs included in each RBG is determined according to the size of BWP and the radio resource control (RRC) configuration parameter rbg-Size, and rbg-Size is used to configure "configuration 1" or "configuration 2" in Table 1 below, that is, Nominal RBG size.

**Table 1**

| BWP Size | configuration 1 | configuration 2 |
|---|---|---|
| 1-36 | 2 | 4 |
| 37-72 | 4 | 8 |
| 73-144 | 8 | 16 |
| 145-275 | 16 | 16 |

As illustrated in FIG. 4, Type 0 frequency domain resource allocation uses a bitmap to indicate RBGs allocated to the terminal, where 1 represents allocating this RBG to the terminal, and 0 represents not allocating this RBG to the terminal. For a BWP containing ${N}_{BWP , i}^{size}$ PRBs, the total number of RBGs included in the BWP is *N_{RBG}* , ${N}_{RBG} = \left[\left({N}_{BWP , i}^{size}+\left({N}_{BWP , i}^{start} mod P\right)\right)/P\right]$, where ${N}_{BWP , i}^{start}$ is the number of the starting resource block in the BWP, and P is the nominal RBG size. The size of the first RBG is ${RBG}_{0}^{size} = P - {N}_{BWP , i}^{start} mod P$ *.* In the case of $\left({N}_{BWP , i}^{start}+{N}_{BWP , i}^{size}\right) mod P > 0$*,* the size of the last RBG is ${RBG}_{last}^{size} = \left({N}_{BWP , i}^{start}+{N}_{BWP , i}^{size}\right) mod P$*,* otherwise, ${RBG}_{last}^{size} = P$. The sizes of the remaining RBGs are P.

### Resource allocation Type1:

As illustrated in FIG. 4, Type 1 resource allocation may indicate a series of consecutive virtual RBs to the terminal, using a resource indication value (RIV) to jointly encode the allocated starting RB (RBₛₜₐᵣₜ) and the number of RBs (L_{RBs}).

The starting RB and the number of RBs are jointly encoded in the following manner: in the case of ${L}_{RBs} - 1 < {N}_{BWP}^{size} / 2 , RIV = {N}_{BWP}^{size} \left({L}_{RBs}-1\right) + {RB}_{start}$, otherwise $RIV = {N}_{BWP}^{size} \left({N}_{BWP}^{size}-{L}_{RBs}+1\right) + \left({N}_{BWP}^{size}-1-{RB}_{start}\right)$. ${N}_{BWP}^{size}$ is the size of BWP, and L_{RBs} is not less than 1 and not greater than ${N}_{BWP}^{size} - {L}_{RBs}$.

### 3. Frequency hopping

NR supports frequency hopping for frequency domain resource allocation Type1 of PUSCH. The basic implementation scheme is that a high layer configures multiple frequency hopping offsets, and then indicate one of them through DCI. Specifically:

The frequency hopping offsets are configured by an RRC parameter frequencyHoppingOffsetLists: when a BWP size is less than 50 PRBs, RRC configures two frequency hopping offsets, and a UL grant indicates one of them; when a BWP size is greater than or equal to 50 PRBs, RRC configures four frequency hopping offsets, and a UL grant indicates one of them.

For intra-slot frequency hopping, the starting PRB (Physical Resource Block) number is ${RB}_{start} \left(i\right) = \left\{\begin{matrix}{RB}_{start} , i = 0 \\ \left({RB}_{start}+{RB}_{offset}\right) mod {N}_{BWP}^{size} , i = 1\end{matrix}\right.$, where i =0 and i =1 correspond to the first hop and the second hop, respectively.

For inter-slot frequency hopping, the starting PRB number of each hop is ${RB}_{start} \left({n}_{s}^{μ}\right) = \left\{\begin{matrix}{RB}_{start} , {n}_{s}^{μ} mod 2 = 0 \\ \left({RB}_{start}+{RB}_{offset}\right) mod {N}_{BWP}^{size} , {n}_{s}^{μ} mod 2 = 1\end{matrix}\right.$, where is the current slot number within a system radio frame.

In a DCI FDRA indication field with frequency hopping enabled, for PUSCH frequency hopping with resource allocation Type1, the highest bits N_{UL_hop} of the FDRA indication field are used to indicate frequency hopping offset, where N_{UL_hop} =1 if the high layer parameter frequencyHoppingOffsetLists contains two offset values, and N_{UL_hop} =2 if the high layer parameter frequencyHoppingOffsetLists contains two offset values. $\left[{log}_{2}\left({N}_{RB}^{UL , BWP}\left({N}_{RB}^{UL , BWP}+1\right)/2\right)\right] - {N}_{UL_hop}$ bits in the FDRA indication field provide frequency domain resource allocation, where ${N}_{RB}^{UL , BWP}$ is the number of PRBs included in the uplink BWP.

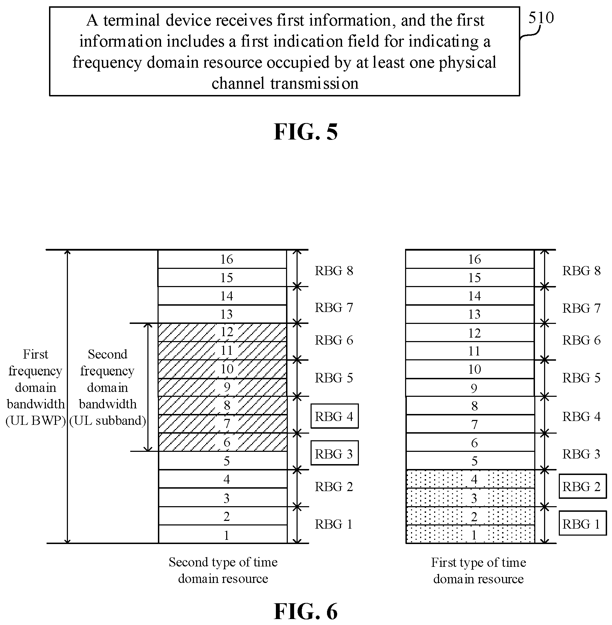

FIG. 5 illustrates a flowchart of a wireless communication method according to an embodiment of the present disclosure. Each operation of the method is performed by a terminal device. The method may include the operation in 510.

In 510, a terminal device receives first information. The first information includes a first indication field, and the first indication field indicates a frequency domain resource occupied by at least one physical channel transmission.

At least one physical channel occupies a first type of time domain resource and/or a second type of time domain resource.

In the embodiments of the present disclosure, the time domain resource may be a subframe, a slot, a symbol, or the like, and the present disclosure is not limited thereto. In some embodiments, the first information is DCI.

In some embodiments, the first information is used to schedule the at least one physical channel transmission.

In some embodiments, the first indication field is an FDRA indication field in the DCI.

In some embodiments, the physical channel is a PUSCH or physical downlink shared channel (PDSCH).

In some embodiments, the first type refers to a time domain resource type not including an uplink (UL) subband or a downlink (DL) subband, and the second type refers to a time domain resource type including an uplink subband or a downlink subband.

In some embodiments, the first type refers to a time domain resource type that does not include an uplink subband, and the second type refers to a time domain resource type that includes an uplink subband. For example, the first type of time domain resource may be a full-uplink time domain resource (e.g., a non-SBFD subframe/slot/symbol), the second type of time domain resource may be an SBFD subframe/slot/symbol, and correspondingly, the physical channel is a PUSCH.

In some embodiments, the first type refers to a time domain resource type that does not include a downlink subband, and the second type refers to a time domain resource type that includes a downlink subband. For example, the first type of time domain resource may be a full-downlink time domain resource, the second type of time domain resource may be an SBFD subframe/slot/symbol, and correspondingly, the physical channel is a PDSCH.

In some embodiments, the at least one physical channel transmission is a repetition transmission of the same channel or the same transport block (TB). Exemplarily, the at least one physical channel transmission is a repetition transmission of the same PUSCH/PDSCH.

In some embodiments, the at least one physical channel transmission is a single transmission of one channel or one TB. Exemplarily, the at least one physical channel transmission is a single transmission of PUSCH/PDSCH.

In some embodiments, the at least one physical channel transmission is separate transmissions of different channels or different TBs. Exemplarily, the at least one physical channel transmission is separate transmissions of different PUSCHs/PDSCHs, and different PUSCHs/PDSCHs transmit different TBs.

In some embodiments, the at least one physical channel transmission is separate transmissions of different parts of the same TB. Exemplarily, one TB occupies multiple slots for transmission, and frequency domain resources of the multiple slots are the same.

In some embodiments, the number of bits of the first indication field is determined based on a first frequency domain bandwidth.

In some embodiments, the first frequency domain bandwidth is an active BWP. Further, the active BWP may be an active uplink BWP or an active downlink BWP.

In some embodiments, the physical channel is a PUSCH, and correspondingly, the first frequency domain bandwidth is an active uplink BWP.

In some embodiments, the physical channel is a PDSCH, and correspondingly, the first frequency domain bandwidth is an active downlink BWP.

Exemplarily, FIG. 6 illustrates a schematic diagram of frequency domain resource offsets corresponding to different types of time domain resources according to an embodiment of the present disclosure. In this example, the frequency domain resource allocation type is the frequency domain resource allocation Type0 described above, the first frequency domain bandwidth is an active UL BWP, the size of the first frequency domain bandwidth is 16 PRBs, occupying PRBs 1 to 16, and every two PRBs form an RBG. The number of bits of the first frequency domain bandwidth is equal to the number of RBGs *N_{RBG}* included in the first frequency domain bandwidth, that is, the number of bits of the first indication field is 8.

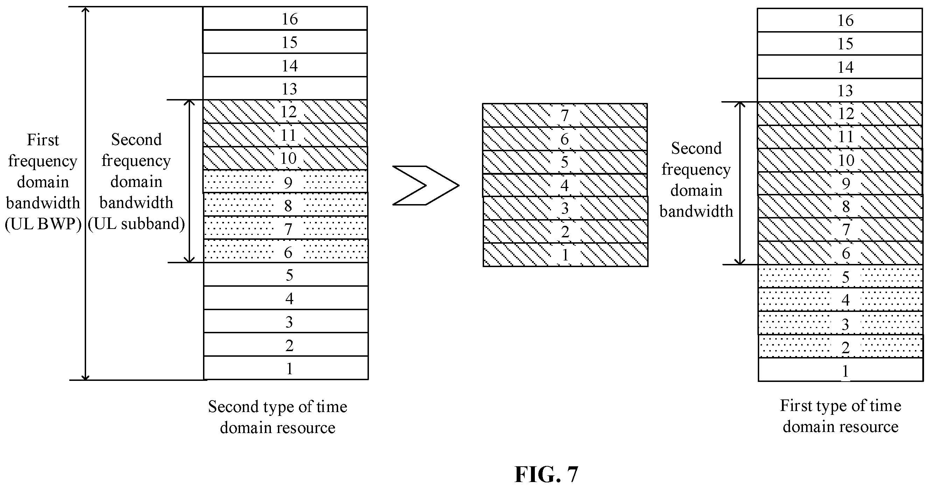

Exemplarily, FIG. 7 illustrates a schematic diagram of frequency domain resource offsets corresponding to different types of time domain resources according to another embodiment of the present disclosure. In this example, the frequency domain resource allocation type is the frequency domain resource allocation Type1 described above, the first frequency domain bandwidth is an active UL BWP, and the size of the first frequency domain bandwidth is 16 PRBs, occupying PRBs 1 to 16. Then, the number of bits of the first indication field can be determined to be 8 according to the formula $\left[{log}_{2}\left({N}_{RB}^{UL , BWP}\left({N}_{RB}^{UL , BWP}+1\right)/2\right)\right] = \left[{log}_{2}\left(16\left(16+1\right)/2\right)\right] = 8$ .

In some embodiments, the interpretation of the first indication field is determined according to the first frequency domain bandwidth and/or the second frequency domain bandwidth. The interpretation of the first indication field refers to interpretation of contents indicated by bits in the first indication field. The second frequency domain bandwidth is a subset of the first frequency domain bandwidth.

In the embodiments of the present disclosure, the interpretation of the first indication field is updated, that is, the interpretation of the first indication field can be determined according to the second frequency domain bandwidth, while the size of the first indication field is still determined according to the first frequency domain bandwidth, which can increase the function of the first indication field without increasing the size of the first indication field, thereby reducing the complexity of detecting the first information by the terminal device.

In some embodiments, the second frequency domain bandwidth is an uplink subband in the active BWP. An uplink subband in an active BWP may also be understood as an intersection of the active BWP and the actually configured uplink subband. Exemplarily, when the physical channel is a PUSCH, the second frequency domain bandwidth is an uplink subband in the active uplink BWP.

In some embodiments, the second frequency domain bandwidth is a downlink subband in the active BWP. A downlink subband in an active BWP may also be understood as an intersection of the active BWP and the actually configured downlink subband. Exemplarily, when the physical channel is a PDSCH, the second frequency domain bandwidth is a downlink subband in the active downlink BWP.

In some embodiments, the active BWP includes two downlink subbands, and any one of the two downlink subbands, or the sum of the two downlink subbands may be taken as the second frequency domain bandwidth in the embodiments of the present disclosure.

In some embodiments, the second frequency domain bandwidth is an uplink subband and a guard bandwidth in the active BWP.

In some embodiments, the second frequency domain bandwidth is a downlink subband and a guard bandwidth in the active BWP.

In some embodiments, the second frequency domain bandwidth is the active BWP minus the third frequency domain bandwidth. The third frequency domain bandwidth is an uplink subband and/or a guard bandwidth in the active BWP, or a downlink subband and/or a guard bandwidth in the active BWP.

In some embodiments, the at least one physical channel each occupies the first type of time domain resource. In this case, the interpretation of the first indication field is determined according to the first frequency domain bandwidth.

In some embodiments, the lowest M bits or the highest M bits of the first indication field are used to indicate a frequency domain resource occupied by the at least one physical channel in the first type of time domain resource. M is determined from a parameter associated with the first frequency domain bandwidth, and M is a positive integer.

In some embodiments, the parameter associated with the first frequency domain bandwidth includes at least one of the following: a size of the first frequency domain bandwidth, or a granularity of frequency domain resource allocation corresponding to the first frequency domain bandwidth.

In some embodiments, there is at least one transmission in the at least one physical channel that occupies the second type of time domain resource. In this case, the interpretation of the first indication field is determined according to the second frequency domain bandwidth.

In some embodiments, the lowest N bits or the highest N bits of the first indication field are used to indicate a frequency domain resource occupied by the at least one physical channel in the second type of time domain resource. N is determined from a parameter associated with the second frequency domain bandwidth, and N is a positive integer.

In some embodiments, the parameter associated with the second frequency domain bandwidth includes at least one of the following: a size of the second frequency domain bandwidth, or a granularity of frequency domain resource allocation corresponding to the second frequency domain bandwidth.

The size of the frequency domain bandwidth refers to the number of PRBs included in the frequency domain bandwidth or the number of associated RBGs, and the granularity of frequency domain resource allocation refers to the smallest unit for allocating frequency domain resources. For example, for frequency domain resource allocation Type 0, the number of PRBs included in the RBG is the granularity of frequency domain resource allocation.

In some embodiments, the reference range of the frequency domain resource indicated by the lowest N bits or the highest N bits of the first indication field is an RBG(s) associated with the second frequency domain bandwidth. An RBG associated with the second frequency domain bandwidth refers to an RBG including at least X RBs belonging to the second frequency domain bandwidth, and X is a positive integer. That is, the RBG associated with the second frequency domain bandwidth includes at least X RBs belonging to the second frequency domain bandwidth. In one implementation, X =1, that is, as long as at least one RB in an RBG belongs to the second frequency domain bandwidth range, the RBG is the RBG associated with the second frequency domain bandwidth. Exemplarily, referring to FIG. 6, since PRB6 in RBG3 belongs to the second frequency domain bandwidth, RBG3 is an RBG associated with the second frequency domain bandwidth, and PRBs included in RBG4, RBG5, and RBG6 all belong to the second frequency domain bandwidth. Therefore, in this example, the RBGs associated with the second frequency domain bandwidth are RBG3, RBG4, RBG5, and RBG6.

In some embodiments, each of the lowest N bits or the highest N bits of the first indication field corresponds to one RBG associated with the second frequency domain bandwidth, respectively. Thus, the lowest N bits or the highest N bits of the first indication field may be used to indicate, from RBGs associated with the second frequency domain bandwidth, an RBG occupied by the at least one physical channel in the second type of time domain resource.

In some embodiments, each codepoint of the lowest N bits or the highest N bits of the first indication field is used to indicate a distribution of frequency domain resources occupied by at least one physical channel in the second type of time domain resource among RBGs associated with the second frequency domain bandwidth. Exemplarily, if N is 2, the four codepoints 00, 01, 10, and 11 may indicate four distributions.

Exemplarily, refer to FIG. 6. In this example, the second frequency domain bandwidth is an uplink subband with a size of 7 PRBs, and the size of the associated RBGs in the first frequency domain bandwidth and the second frequency domain bandwidth is the same, that is, the granularity of frequency domain resource allocation in the first frequency domain bandwidth and the second frequency domain bandwidth is the same. X is 1, and RBGs associated with the second frequency domain bandwidth are RBG3, RBG4, RBG5, and RBG6. The number of RBGs associated with the second frequency domain bandwidth may be determined as N, i.e. N =4. The number of RBGs associated with the second frequency domain bandwidth may be calculated from the size of the second frequency domain bandwidth and the granularity of the frequency domain resource allocation corresponding to the second frequency domain bandwidth. In this example, the number of bits of the first indication field is the same as the number of RBGs associated with the first frequency domain bandwidth, and the number of RBGs associated with the first frequency domain bandwidth may be calculated according to the formula ${N}_{RBG} = \left[{N}_{BWP , i}^{size}+\left.\left({N}_{BWP , i}^{start} mod P\right)\right)/P\right] = \left[\left(16+\left(1 mod 2\right)/2\right.\right] = 8$, where ${N}_{BWP , i}^{size}$ is the number of PRBs included in the first frequency domain bandwidth, ${N}_{BWP , i}^{start}$ is the starting PRB number of the first frequency domain bandwidth, and P is the size of the RBG associated with the first frequency domain bandwidth. The high 4 bits or the low 4 bits in the 8 bits of the first indication field are used to indicate a frequency domain resource occupied by at least one physical channel in the second type of time domain resource, and a reference range of the frequency domain resource indicated by the high 4 bits or the low 4 bits in the 8 bits of the first indication field is RBG3, RBG4, RBG5, and RBG6. Further, if the high 4 bits or the low 4 bits in the 8 bits of the first indication field indicate 0011, the frequency domain resource occupied by the at least one physical channel in the second type of time domain resource is RBG3 and RBG4. If the high 4 bits or the low 4 bits in the 8 bits of the first indication field indicate 1100, the frequency domain resource occupied by the at least one physical channel in the second type of time domain resource is RBG6 and RBG5.

In some embodiments, the reference range of the frequency domain resource indicated by the lowest N bits or the highest N bits of the first indication field is: all RBs included in the second frequency domain bandwidth.

In some embodiments, each of the lowest N bits or the highest N bits of the first indication field is used to indicate one RB included in the second frequency domain bandwidth.

In some embodiments, each codepoint of the lowest N bits or the highest N bits of the first indication field is used to indicate a distribution of frequency domain resources occupied by at least one physical channel in the second type of time domain resource among RBs included in the second frequency domain bandwidth.

Exemplarily, refer to FIG. 7. In this example, the second frequency domain bandwidth is an uplink subband with a size of 7 PRBs. It may be determined N =5 according to the formula $\left[{log}_{2}\left({N}_{RB}^{UL , subband}\left({N}_{RB}^{UL , subband}+1\right)/2\right)\right] = \left[{log}_{2}\left(7\left(7+1\right)/2\right)\right] = 5$, where the size of the second frequency domain bandwidth ${N}_{RB}^{UL , subband}$ is 7, and the granularity of frequency domain resource allocation is 1. In this example, the high 5 bits or the low 5 bits of the first indication field are used to indicate a frequency domain resource occupied by the at least one physical channel in the second type of time domain resource, the reference range of the frequency domain resource indicated by the high 5 bits or the low 5 bits of the first indication field is PRB6 to PRB12, and the SLIV coding scheme corresponding to the high 5 bits or the low 5 bits of the first indication field is the same as described above, except that PRB6 to PRB12 included in the uplink subband are renumbered as PRB1 to PRB7. Further, the high 5 bits or the low 5 bits of the first indication field may indicate that the frequency domain resource occupied by the at least one physical channel in the second type of time domain resource is PRB6 to PRB9.

It is to be noted that, in the embodiments of the present disclosure, the frequency domain resource allocation granularity corresponding to the second frequency domain bandwidth and the frequency domain resource allocation granularity corresponding to the first frequency domain bandwidth may be the same or different. In the case of different granularities, a finer frequency domain resource allocation granularity may be used for the second type of time domain resource, and correspondingly, the terminal device needs to maintain two sets of granularity division schemes (such as two sets of RBG division schemes).

In some embodiments, Q bits in the first indication field are used to indicate at least one of the following: a frequency domain offset between a transmission occupying the first type of time domain resource and a transmission occupying the second type of time domain resource in the at least one physical channel, a first frequency hopping offset, a second frequency hopping offset. Q bits are part or all of the bits in the first indication field except the lowest N bits or the highest N bits, and Q is a positive integer.

The first frequency hopping offset corresponds to a transmission occupying the first type of time domain resource in the at least one physical channel. That is, the first frequency hopping offset may be a frequency domain offset between every two adjacent transmissions occupying the first type of time domain resource in the at least one physical channel, or may be a frequency domain offset between two hops of each transmission occupying the first type of time domain resource in the at least one physical channel.

The second frequency hopping offset corresponds to a transmission occupying the second type of time domain resource in the at least one physical channel. That is, the second frequency hopping offset may be a frequency domain offset between every two adjacent transmissions occupying the second type of time domain resource in the at least one physical channel, or may be a frequency domain offset between two hops of each transmission occupying the second type of time domain resource in the at least one physical channel.

In some embodiments, each codepoint of all or part of the Q bits may correspond to an offset value of the frequency domain offset.

In some embodiments, the frequency domain offset is an RB offset or an RBG offset.

In some embodiments, the RBG offset is determined based on an RBG associated with the first frequency domain bandwidth. That is, the unit of the frequency domain offset is the same as the granularity of frequency domain resource allocation corresponding to the first frequency domain bandwidth, i.e., the number of RBs included in each offset in the RBG offset is equal to the number of RBs in the RBG associated with the first frequency domain bandwidth.

In some embodiments, the RBG offset is determined based on an RBG associated with the second frequency domain bandwidth, that is, the unit of the frequency domain offset is the same as the granularity of frequency domain resource allocation corresponding to the second frequency domain bandwidth, i.e., the number of RBs included in each offset in the RBG offset is equal to the number of RBs in the RBG associated with the second frequency domain bandwidth.

In some embodiments, the RBG offset is determined based on a larger value of an RBG associated with the first frequency domain bandwidth and an RBG associated with the second frequency domain bandwidth. The size of an RBG is the number of RBs in the RBG. For example, if the RBG associated with the first frequency domain bandwidth is larger than the RBG associated with the second frequency domain bandwidth, the unit of the frequency domain offset is the same as the granularity of frequency domain resource allocation corresponding to the first frequency domain bandwidth, i.e., the number of RBs included in each offset in the RBG offset is equal to the number of RBs in the RBG associated with the first frequency domain bandwidth.

In some embodiments, the RBG offset is determined based on a smaller value of an RBG associated with the first frequency domain bandwidth and an RBG associated with the second frequency domain bandwidth. For example, if the RBG associated with the second frequency domain bandwidth is smaller than the RBG associated with the first frequency domain bandwidth, the unit of the frequency domain offset is the same as the granularity of frequency domain resource allocation corresponding to the second frequency domain bandwidth, i.e., the number of RBs included in each offset in the RBG offset is equal to the number of RBs in the RBG associated with the second frequency domain bandwidth.

In some embodiments, the frequency domain resource occupied by the at least one physical channel in the first type of time domain resource is determined based on the frequency domain resource occupied by the at least one physical channel in the second type of time domain resource.

In some embodiments, the frequency domain resource of a transmission occupying the first type of time domain resource in the at least one physical channel is determined based on at least one of the following: a frequency domain resource occupied by the at least one physical channel in the second type of time domain resource, a frequency domain offset between the transmission occupying the first type of time domain resource and the transmission occupying the second type of time domain resource in the at least one physical channel, or a size of the first frequency domain bandwidth.

In some embodiments, an RB number of a transmission occupying the first type of time domain resource in the at least one physical channel is determined based on a size of the first frequency domain bandwidth and a first intermediate value.

In some embodiments, an RB number of a transmission occupying the first type of time domain resource in the at least one physical channel is obtained by performing a modulo operation on the first intermediate value and the size of the first frequency domain bandwidth.

In some embodiments, the first intermediate value is determined according to the RB number of the transmission occupying the second type of time domain resource in the at least one physical channel and the frequency domain offset described above.

In some embodiments, the first intermediate value is the sum of the RB number of the transmission occupying the second type of time domain resource in the at least one physical channel and the frequency domain offset.

In some embodiments, an RB number of a transmission occupying the first type of time domain resource in the at least one physical channel is RB₁= (RB₂+ RBoffset) mod BWPsize, where RB₂ is the RB number of the transmission occupying the second type of time domain resource in the at least one physical channel, RBoffset is the frequency domain offset described above, and BWPsize is the size of the first frequency domain bandwidth.

In some embodiments, an RBG number occupied by a transmission occupying the first type of time domain resource in the at least one physical channel is determined based on the number of RBGs included in the first frequency domain bandwidth and a second intermediate value.

In some embodiments, an RBG number occupied by a transmission occupying the first type of time domain resource in the at least one physical channel is obtained by performing a modulo operation on the second intermediate value and the number of RBGs included in the first frequency domain bandwidth.

In some embodiments, the second intermediate value is determined according to an RBG number occupied by the transmission occupying the second type of time domain resource in the at least one physical channel and the frequency domain offset described above.

In some embodiments, the second intermediate value is the sum of the RBG number occupied by the transmission occupying the second type of time domain resource in the at least one physical channel and the frequency domain offset.

In some embodiments, an RBG number occupied by a transmission occupying the first type of time domain resource in the at least one physical channel is RBG₁= (RBG₂+ RBGoffset) mod BWPnum, where RBG₂ is the RBG number occupied by the transmission occupying the second type of time domain resource in the at least one physical channel, RBGoffset is the frequency domain offset described above, and BWPnum is the number of RBGs included in the first frequency domain bandwidth.

Exemplarily, referring to FIG. 6, in this example, the number of bits of the first indication field is 8, N is 4, and the RBG occupied by a transmission occupying the second type of time domain resource in at least one physical channel is {RBG3~ RBG4}, then all or part of the first indication field except the high 4 bits or the low 4 bits, for example, the high two bits of the remaining four bits, may be used to indicate the RBG offset, for example, 00, 01, 10, and 11 represent offsets of-2 RBG, -1 RBG, 1 RBG, and 2 RBG, respectively. If 00 is indicated, the RBG occupied by the transmission occupying the first type of time domain resource in the at least one physical channel is {RBG3~ RBG4} -2 RBG, that is, RBG1 and RBG2.

Exemplarily, referring to FIG. 7, in this example, the number of bits of the first indication field is 8, N is 5, and the RB of a transmission occupying the second type of time domain resource in at least one physical channel is {PRB6~PRB9}, then all or part of the first indication field except the high 5 bits or the lower 5 bits, such as the high two bits of the remaining three bits, may be used to indicate the RB offset, for example, 00, 01, 10, and 11 represent the offset of-4 RBs, -2 RBs, 2 RBs, and 4 RBs, respectively. If 00 is indicated, the RB of the transmission occupying the first type of time domain resource in the at least one physical channel is {PRB6~ PRB9} -4 PRB, that is, PRB2~PRB5.

Taking uplink transmission as an example, by setting the frequency domain offset, when the second frequency domain bandwidth is an uplink subband at a middle position of an uplink BWP, the frequency domain resource corresponding to a transmission occupying the first type of time domain resource in at least one physical channel can be offset from the middle position of the uplink BWP to two sides. This not only ensures that in the second type of time domain resource, the transmission of the physical channel falls within the range of the uplink subband, but also avoids fragmentation of (uplink) frequency domain resources in the first type of time domain resource.

In the above embodiments, the first indication field is interpreted according to the size of the second frequency domain bandwidth, so that the number of bits required to interpret the first indication field can be reduced, and the remaining bits except N bits can be interpreted for other purposes, such as indicating the frequency domain offset and frequency hopping offset, that is, the purpose of flexibly indicating frequency domain resources of two symbol types is achieved without increasing the overhead of the first information (such as DCI).

Frequency hopping is an important means to obtain frequency diversity gain in uplink transmission. According to the above introduction, it can be known that for different uplink transmission bandwidths, the number of frequency hopping offsets and the size of a frequency hopping offset are generally configured according to the uplink transmission bandwidth. For the first type of time domain resource and the second type of time domain resource, effective uplink transmission bandwidths are different, so how the configuration and indication of a frequency hopping offset respectively adapt to different uplink transmission bandwidths is also a problem that needs to be considered. In the above embodiments, it is mentioned that Q bits in the first indication field may also be used to indicate the first frequency hopping offset and the second frequency hopping offset. This will be further described in the following embodiments.

In some embodiments, R bits in the first indication field are used to indicate a first frequency hopping offset, and S bits in the first indication field are used to indicate a second frequency hopping offset. R is a positive integer and S is a positive integer.

In some embodiments, the R bits and the S bits are mutually non-repetitive bits in the first indication field. In this way, different frequency hopping offsets can be more flexibly indicated.

In some embodiments, the R bits and the S bits may be the same bits in the first indication field, or the R bits may include S bits. In this case, there is no need to design additional bits to indicate two frequency hopping offsets. This is more applicable when the size of the second frequency domain bandwidth is similar to or the same as the size of the first frequency domain bandwidth, for example, when the number of bits in the first indication field other than the N bits is small.

In some embodiments, T bits in the first indication field are used to indicate a first frequency hopping offset and a second frequency hopping offset, and T is a positive integer.

In some embodiments, T is determined according to the number of frequency hopping offsets included in the first frequency hopping offset list.

In some embodiments, T is determined according to the number of frequency hopping offsets included in the second frequency hopping offset list.

In some embodiments, T is determined according to the greater one of the number of frequency hopping offsets included in the first frequency hopping offset list and the number of frequency hopping offsets included in the second frequency hopping offset list.

In some embodiments, each codepoint of T bits may be used to indicate one frequency hopping offset in the first frequency hopping offset list and the second frequency hopping offset list, respectively.

Exemplarily, if the codepoint of T bits (T is 2) in the first indication field is 00, it may indicate the first frequency hopping offset in the first frequency hopping offset list and the first frequency hopping offset in the second frequency hopping offset list. If the codepoint of T bits (T is 2) in the first indication field is 01, it may indicate the second frequency hopping offset in the first frequency hopping offset list and the second frequency hopping offset in the second frequency hopping offset list.

In some embodiments, the first frequency hopping offset is determined from the first frequency hopping offset list, and the second frequency hopping offset is determined from the second frequency hopping offset list.

The first frequency hopping offset list includes at least one frequency hopping offset configured for the first type of time domain resource. Exemplarily, each codepoint of the R bits may indicate one of frequency hopping offsets in the first frequency hopping offset list.

The second frequency hopping offset list includes at least one frequency hopping offset configured for the second type of time domain resource.

Frequency hopping offsets in the first frequency hopping offset list and the second frequency hopping offset list may be directly or indirectly configured by the network device. Exemplarily, the network device may configure a corresponding offset value for a frequency hopping offset in the first frequency hopping offset list to indicate a frequency hopping offset in the second frequency hopping offset list. For example, if the offset value 1 and the offset value 2 are configured for the frequency hopping offset 1 and the frequency hopping offset 2 in the first frequency hopping offset list, respectively, frequency hopping offsets in the second frequency hopping offset list are the frequency hopping offset 1+ the offset value 1 and the frequency hopping offset 2+ the offset value 2, that is, the second frequency hopping list is not directly configured, but is obtained by the first frequency hopping list and the offset values.

Exemplarily, if the codepoint of T bits (T is 2) in the first indication field is 00, it may indicate the first frequency hopping offset in the first frequency hopping offset list and the first offset value in the offset value list. If the codepoint of T bits (T is 2) in the first indication field is 01, it may indicate the second frequency hopping offset in the first frequency hopping offset list and the second offset value in the offset value list. The offset value list includes at least one offset value configured for the frequency hopping offsets in the first offset list.

Alternatively, for example, in the case of T =2, when the number of frequency hopping offsets included in the first frequency hopping offset list and the number of frequency hopping offsets included in the second frequency hopping offset list are different, a frequency hopping offset is determined from the frequency hopping offset list including a larger number of frequency hopping offsets with reference to codepoints (00, 01, 10, 11) of all T bits (2 bits); and a frequency hopping offset is determined from the frequency hopping offset list including a smaller number of frequency hopping offsets with reference to a codepoint (1 or 0) of a high or low bit of the T bits (2 bits).

In some embodiments, R is determined according to the number of frequency hopping offsets included in the first frequency hopping offset list.

In some embodiments, S is determined according to the number of frequency hopping offsets included in the second frequency hopping offset list. Exemplarily, each codepoint of the S bits may indicate one of frequency hopping offsets in the second frequency hopping offset list. For example, if the number of frequency domain offsets included in the second frequency hopping offset list is 2, S =1 (codepoints are 0 and 1), and if the number of frequency domain offsets included in the second frequency hopping offset list is 4, S =2 (codepoints are 00, 01, 10, and 11).

In some embodiments, the number of frequency hopping offsets included in the second frequency hopping offset list is less than the number of frequency hopping offsets included in the first frequency hopping offset list. In this case, the S bits may be the highest S bits or the lowest S bits among the R bits, and S is a positive integer less than R.

In some embodiments, the number of frequency hopping offsets included in the second frequency hopping offset list is determined according to the first frequency domain bandwidth. Exemplarily, when the first frequency domain bandwidth is less than 50 PRBs, two frequency hopping offsets are configured in the second frequency hopping offset list. When the first frequency domain bandwidth is greater than 50 PRBs, four frequency hopping offsets are configured in the second frequency hopping offset list.

In some embodiments, the number of frequency hopping offsets included in the second frequency hopping offset list is determined according to the second frequency domain bandwidth. Exemplarily, when the second frequency domain bandwidth is less than 50 PRBs, two frequency hopping offsets are configured in the second frequency hopping offset list. When the second frequency domain bandwidth is greater than 50 PRBs, four frequency hopping offsets are configured in the second frequency hopping offset list.

In some embodiments, the first frequency hopping offset and the second frequency hopping offset are determined from the same frequency hopping offset list including at least one frequency hopping offset. Exemplarily, the frequency hopping offset list may include 4 frequency hopping offsets, of which 4 frequency hopping offsets may be used as the first frequency hopping offsets and 2 frequency hopping offsets may be used as the second frequency hopping offsets. Then, S may be determined according to 4 and R may be determined according to 2.

Exemplarily, refer to FIG. 7. As can be seen from the above embodiments, in this example, the number of bits of the first indication field determined by the first frequency domain bandwidth is 8. When frequency hopping is introduced, since the size of the first frequency domain bandwidth is 16 PRBs, the number of frequency hopping offsets in the first frequency hopping offset list is 2, and correspondingly, the first indication field may include S=1 bit for indicating the first frequency hopping offset. Therefore, the number of bits of the first indication field may be 9, and S =1 bit may be the highest bit in the first indication field. Further, in this example, N =5, it can be seen that there are three bits remaining in the first indication field other than N bits and S =1 bit. For indication of the frequency hopping offset, in one possible case, the high 1 bit of the 3 bits may be used to indicate the second frequency hopping offset, and the low 2 bits of the 3 bits may be used to indicate the frequency domain offset described above. In another possible case, S=1 bit may be used to indicate the first frequency hopping offset and the second frequency hopping offset, for example, if the bit is 0, it indicates that the first frequency hopping offset is the first frequency hopping offset in the first frequency hopping offset list, and the second frequency hopping offset is the first frequency hopping offset in the second frequency hopping offset list; and if the bit is 1, it indicates that the first frequency hopping offset is the second frequency hopping offset in the first frequency hopping offset list, and the second frequency hopping offset is the second frequency hopping offset in the second frequency hopping offset list.

In the above embodiments, the remaining bits in the first indication field other than N bits are used to indicate the two types of frequency hopping offsets, without the need of increasing the number of bits of the first information, so that the complexity of terminal detection can be reduced.

In some embodiments, for a transmission that occupies the first type of time domain resource in at least one physical channel, a starting RB is determined according to at least one of a starting RB corresponding to a frequency domain resource occupied by the at least one physical channel in the first type of time domain resource, the first frequency hopping offset, or the first frequency domain bandwidth.

It can be seen from the above embodiments that, the frequency domain resource occupied by the at least one physical channel in the first type of time domain resource may be determined based on a frequency domain resource occupied by the at least one physical channel in the second type of time domain resource. Correspondingly, the starting RB corresponding to the frequency domain resource occupied by the at least one physical channel in the first type of time domain resource may also be determined based on a starting RB corresponding to the frequency domain resource occupied by the at least one physical channel in the second type of time domain resource. Specifically, an index/number of a starting RB (a starting RB number) corresponding to the frequency domain resource occupied by the at least one physical channel in the first type of time domain resource is *RB*_{*start*-1} = (*RB*_{*start*-2} + RBoffset) mod BWPsize, where *RB*_{*start*-2} is a starting RB number corresponding to the frequency domain resource occupied by the at least one physical channel in the second type of time domain resource, RBoffset is the frequency domain offset, and BWPsize is the size of the first frequency domain bandwidth.

In some embodiments, in a case that a transmission occupying the first type of time domain resource in the at least one physical channel performs intra-slot frequency hopping, for the first hop in each transmission occupying the first type of time domain resource in the at least one physical channel, the starting RB number is determined according to a starting RB number corresponding to the frequency domain resource occupied by the at least one physical channel in the first type of time domain resource. Specifically, the starting RB number is equal to the index of the starting RB corresponding to the frequency domain resource occupied by the at least one physical channel in the first type of time domain resource. For the second hop in each transmission occupying the first type of time domain resource in the at least one physical channel, the starting RB number is determined according to the starting RB number corresponding to the frequency domain resource occupied by the at least one physical channel in the first type of time domain resource, the first frequency hopping offset, and the first frequency domain bandwidth. Specifically, the starting RB number is obtained by performing a modulo operation on a third intermediate value and the size of the first frequency domain bandwidth, and the third intermediate value may be a sum of the starting RB number corresponding to the frequency domain resource occupied by the at least one physical channel in the first type of time domain resource and the first frequency hopping offset.

Exemplarily, in a case that a transmission occupying the first type of time domain resource in the at least one physical channel performs intra-slot frequency hopping, *RB*_{*start*1} = $\left\{\begin{matrix}{RB}_{start - 1} , i = 0 \\ \left({RB}_{start - 1}+{RB}_{offset - 1}\right) mod \left(BWP size\right) , i = 1\end{matrix}\right.$, where *RB*_{*start*1} is the starting RB number of a certain hop in a transmission occupying the first type of time domain resource in the at least one physical channel, *RB*_{*offset-*1} is the first frequency hopping offset, *BWP size* is the size of the first frequency domain bandwidth (active BWP), and *i* = 0 and i =1 indicate the first hop and the second hop in a transmission, respectively.

In some embodiments, when a transmission occupying the first type of time domain resource in the at least one physical channel performs inter-slot frequency hopping, for a transmission, in a slot for which a first determination value is 0, among transmissions occupying the first type of time domain resource in the at least one physical channel, the starting RB number is determined based on a starting RB number corresponding to a frequency domain resource occupied by the at least one physical channel in the first type of time domain resource. Specifically, the starting RB number is equal to the index of the starting RB corresponding to the frequency domain resource occupied by the at least one physical channel in the first type of time domain resource. For a transmission, in a slot for which a first determination value is 1, among transmissions occupying the first type of time domain resource in the at least one physical channel, the starting RB number is determined according to the starting RB number corresponding to the frequency domain resource occupied by the at least one physical channel in the first type of time domain resource, the first frequency hopping offset and the first frequency domain bandwidth. Specifically, the starting RB number is obtained by performing a modulo operation on the third intermediate value and the size of the first frequency domain bandwidth. The first determination value may be determined according to the number/index of the slot in which the transmission is located. Specifically, the first determination value may be obtained by performing a modulo calculation on the number of the slot in which the transmission is located and 2.

Exemplarily, in a case that a transmission occupying the first type of time domain resource in the at least one physical channel performs inter-slot frequency hopping, ${RB}_{start 2} = \left\{\begin{matrix}{RB}_{start - 1} , {n}_{s}^{μ} mod 2 = 0 \\ \left({RB}_{start - 1}+{RB}_{offset - 1}\right) mod \left(BWP size\right) , {n}_{s}^{μ} mod 2 = 1\end{matrix}\right.$ , where *RB*_{*start*2} is the starting RB number of a transmission in a certain slot among transmissions occupying the first type of time domain resource in the at least one physical channel. ${n}_{s}^{μ} mod 2$ is the first determination value, and ${n}_{s}^{μ}$ is the number of the certain slot described above.

In some embodiments, for a transmission that occupies the second type of time domain resource in the at least one physical channel, the starting RB is determined according to at least one of a starting RB corresponding to a frequency domain resource occupied by the at least one physical channel in the second type of time domain resource, the second frequency hopping offset, and the second frequency domain bandwidth.

As can be seen from the above embodiments, the lowest N bits or the highest N bits of the first indication field are used to indicate the frequency domain resource occupied by the at least one physical channel in the second type of time domain resource. That is, the lowest N bits or the highest N bits of the first indication field may directly indicate the starting RB corresponding to the frequency domain resource occupied by the at least one physical channel in the second type of time domain resource.

In some embodiments, in a case that a transmission occupying the second type of time domain resource in the at least one physical channel performs intra-slot frequency hopping, for the first hop in each transmission occupying the second type of time domain resource in the at least one physical channel, the starting RB number is determined according to a starting RB number corresponding to the frequency domain resource occupied by the at least one physical channel in the second type of time domain resource. Specifically, the starting RB number is equal to the index of the starting RB corresponding to the frequency domain resource occupied by the at least one physical channel in the second type of time domain resource. For the second hop in each transmission occupying the second type of time domain resource in the at least one physical channel, the starting RB number is determined according to the starting RB number corresponding to the frequency domain resource occupied by the at least one physical channel in the second type of time domain resource, the second frequency hopping offset, and the second frequency domain bandwidth. Specifically, the starting RB number is obtained by performing a modulo operation on a fourth intermediate value and the size of the second frequency domain bandwidth, and the fourth intermediate value may be a sum of the starting RB number corresponding to the frequency domain resource occupied by the at least one physical channel in the second type of time domain resource and the first frequency hopping offset.

Exemplarily, in the case that a transmission occupying the second type of time domain resource in the at least one physical channel performs intra-slot frequency hopping, ${RB}_{start 3} = \left\{\begin{matrix}{RB}_{start - 2} , i = 0 \\ \left({RB}_{start - 2}+{RB}_{offset - 2}\right) mod \left(UL subband size\right) , i = 1\end{matrix}\right.$, where *RB*_{*start*3} is the starting RB number of a certain hop in a transmission occupying the second type of time domain resource in the at least one physical channel, *RB*_{*offset*-2} is the second frequency hopping offset, *UL subband size* is the size of the second frequency domain bandwidth (uplink subband), and *i* = 0 and i=1 indicate the first hop and the second hop in each transmission, respectively.

In some embodiments, when a transmission occupying the second type of time domain resource in the at least one physical channel performs inter-slot frequency hopping, for a transmission, in a slot for which a first determination value is 0, among transmissions occupying the second type of time domain resource in the at least one physical channel, the starting RB number is determined based on a starting RB number corresponding to a frequency domain resource occupied by the at least one physical channel in the second type of time domain resource. Specifically, the starting RB number is equal to the index of the starting RB corresponding to the frequency domain resource occupied by the at least one physical channel in the second type of time domain resource. For a transmission, in a slot for which a first determination value is 1, among transmissions occupying the second type of time domain resource in the at least one physical channel, the starting RB number is determined according to the starting RB number corresponding to the frequency domain resource occupied by the at least one physical channel in the second type of time domain resource, the second frequency hopping offset and the first frequency domain bandwidth. Specifically, the starting RB number is obtained by performing a modulo operation on the fourth intermediate value and the size of the second frequency domain bandwidth.

Exemplarily, in a case that a transmission occupying the second type of time domain resource in the at least one physical channel performs inter-slot frequency hopping, ${RB}_{start 4} = \left\{\begin{matrix}{RB}_{start - 2} , {n}_{s}^{μ} mod 2 = 0 \\ \left({RB}_{start - 2}+{RB}_{offset - 2}\right) mod \left(UL subband size\right) , {n}_{s}^{μ} mod 2 = 1\end{matrix}\right.$, where *RB*_{*start*4} is the starting RB number of a transmission in a certain slot among transmissions occupying the second type of time domain resource in the at least one physical channel, and ${n}_{s}^{μ}$ is the number of the certain slot described above.

It should be noted that the above formulas in pairs can be arbitrarily divided and combined by a skilled person according to needs, and the present disclosure is not limited thereto.

In the technical solutions provided by the embodiments of the present disclosure, a terminal device receives first information, a first indication field in the first information indicates a frequency domain resource occupied by at least one physical channel transmission, and the at least one physical channel occupies the first type of time domain resource and/or the second type of time domain resource. This achieves indication of the frequency domain resource occupied by the at least one physical channel transmission by the first information. Further, in a case where at least one physical channel occupies the first type and the second type of time domain resources, by using the above method, frequency domain resources occupied by the physical channel transmissions in the two different types of time domain resources can be indicated by one indication information (that is, the first information).

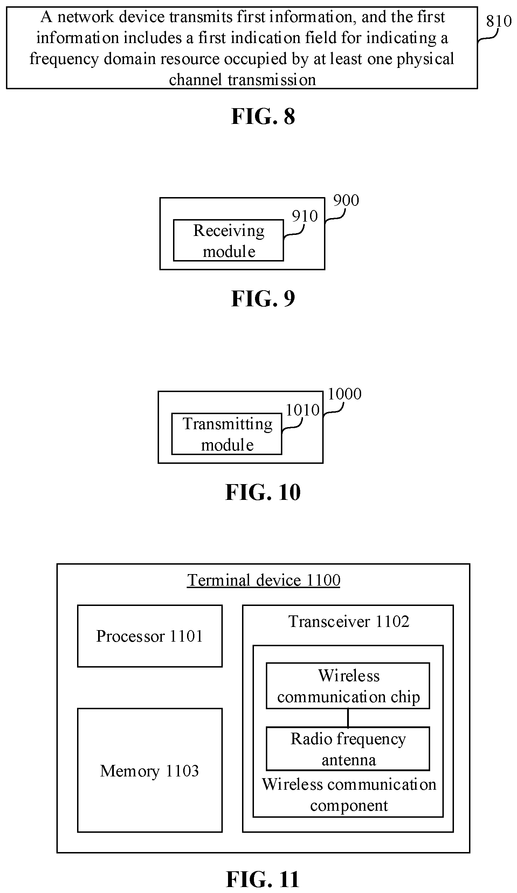

FIG. 8 illustrates a flowchart of a wireless communication method according to an embodiment of the present disclosure. Each operation of the method is performed by a network device. The method may include the operation in 810.

In 810, a network device transmits first information. The first information includes a first indication field, and the first indication field indicates a frequency domain resource occupied by at least one physical channel transmission.

The at least one physical channel occupies a first type of time domain resource and/or a second type of time domain resource.

In some embodiments, the first type refers to a time domain resource type that does not include an uplink subband or a downlink subband, and the second type refers to a time domain resource type that includes an uplink subband or a downlink subband.

In some embodiments, the number of bits of the first indication field is determined based on a first frequency domain bandwidth.

In some embodiments, the lowest N bits or the highest N bits of the first indication field are used to indicate a frequency domain resource occupied by the at least one physical channel in the second type of time domain resource. N is determined from a parameter associated with a second frequency domain bandwidth, and the second frequency domain bandwidth is a subset of the first frequency domain bandwidth. N is a positive integer.

In some embodiments, there is at least one transmission in the at least one physical channel that occupies the second type of time domain resource.

In some embodiments, the parameter associated with the second frequency domain bandwidth includes at least one of a size of the second frequency domain bandwidth or a granularity of frequency domain resource allocation corresponding to the second frequency domain bandwidth.

In some embodiments, the frequency domain resource occupied by the at least one physical channel in the first type of time domain resource is determined based on the frequency domain resource occupied by the at least one physical channel in the second type of time domain resource.

In some embodiments, a reference range of the frequency domain resource indicated by the lowest N bits or the highest N bits of the first indication field is: an RBG(s) associated with the second frequency domain bandwidth, where the RBG associated with the second frequency domain bandwidth is an RBG including at least X RBs belonging to the second frequency domain bandwidth, and X is a positive integer; or, all RBs included in the second frequency domain bandwidth.

In some embodiments, Q bits in the first indication field are used to indicate at least one of the following information: a frequency domain offset between a transmission occupying the first type of time domain resource and a transmission occupying the second type of time domain resource in the at least one physical channel, a first frequency hopping offset, or a second frequency hopping offset.

The first frequency hopping offset corresponds to the transmission occupying the first type of time domain resource in the at least one physical channel.

The second frequency hopping offset corresponds to the transmission occupying the second type of time domain resource in the at least one physical channel.

Q bits are part or all of the bits in the first indication field except the lowest N bits or the highest N bits, and Q is a positive integer.

In some embodiments, the frequency domain offset is an RB offset or an RBG offset.

In some embodiments, the RBG offset is determined based on an RBG associated with the first frequency domain bandwidth. Alternatively, the RBG offset is determined based on an RBG associated with the second frequency domain bandwidth. Alternatively, the RBG offset is determined based on a smaller one of the RBG associated with the first frequency domain bandwidth and the RBG associated with the second frequency domain bandwidth. Alternatively, the RBG offset is determined based on a larger one of the RBG associated with the first frequency domain bandwidth and the RBG associated with the second frequency domain bandwidth.

In some embodiments, a frequency domain resource of a transmission occupying the first type of time domain resource in the at least one physical channel is determined based on at least one of: a frequency domain resource occupied by the at least one physical channel in the second type of time domain resource, a frequency domain offset between the transmission occupying the first type of time domain resource and a transmission occupying the second type of time domain resource in the at least one physical channel, or a size of the first frequency domain bandwidth.

In some embodiments, an RB number of the transmission occupying the first type of time domain resource in the at least one physical channel is obtained by performing a modulo operation on a first intermediate value and the size of the first frequency domain bandwidth. The first intermediate value is a sum of an RB number of the transmission occupying the second type of time domain resource in the at least one physical channel and the frequency domain offset.

In some embodiments, an RBG number occupied by the transmission occupying the first type of time domain resource in the at least one physical channel is obtained by performing a modulo operation on a second intermediate value and a number of RBGs included in the first frequency domain bandwidth. The second intermediate value is a sum of an RBG number occupied by the transmission occupying the second type of time domain resource in the at least one physical channel and the frequency domain offset.

In some embodiments, the first frequency domain bandwidth is an active BWP.

In some embodiments, the second frequency domain bandwidth is: an uplink subband in an active BWP; or, a downlink subband in the active BWP; or, an uplink subband and a guard bandwidth in the active BWP; or, a downlink subband and a guard bandwidth in the active BWP.

In some embodiments, the lowest M bits or the highest M bits of the first indication field are used to indicate a frequency domain resource occupied by the at least one physical channel in the first type of time domain resource. M is determined from a parameter associated with the first frequency domain bandwidth, and M is a positive integer.

In some embodiments, each of the at least one physical channel occupies the first type of time domain resource.

In some embodiments, the parameter associated with the first frequency domain bandwidth includes at least one of a size of the first frequency domain bandwidth or a granularity of frequency domain resource allocation corresponding to the first frequency domain bandwidth.

In some embodiments, R bits in the first indication field are used to indicate a first frequency hopping offset, and S bits in the first indication field are used to indicate a second frequency hopping offset. R is a positive integer and S is a positive integer.

In some embodiments, T bits in the first indication field are used to indicate a first frequency hopping offset and a second frequency hopping offset. T is a positive integer.

In some embodiments, the first frequency hopping offset is determined from a first frequency hopping offset list, and the second frequency hopping offset is determined from a second frequency hopping offset list.

The first frequency hopping offset list includes at least one frequency hopping offset configured for the first type of time domain resource.

The second frequency hopping offset list includes at least one frequency hopping offset configured for the second type of time domain resource.

In some embodiments, the number of frequency hopping offsets included in the second frequency hopping offset list is determined from a first frequency domain bandwidth, and the first frequency domain bandwidth is an active BWP.

In some embodiments, the number of frequency hopping offsets included in the second frequency hopping offset list is determined from a second frequency domain bandwidth that is a subset of the first frequency domain bandwidth.

In some embodiments, the first frequency hopping offset and the second frequency hopping offset are determined from the same frequency hopping offset list including at least one frequency hopping offset.

In some embodiments, for a transmission occupying the first type of time domain resource in the at least one physical channel, the starting RB is determined according to at least one of a starting RB corresponding to a frequency domain resource occupied by the at least one physical channel in the first type of time domain resource, the first frequency hopping offset, or the first frequency domain bandwidth.

In some embodiments, for a transmission occupying the second type of time domain resource in the at least one physical channel, the starting RB is determined according to at least one of a starting RB corresponding to a frequency domain resource occupied by the at least one physical channel in the second type of time domain resource, the second frequency hopping offset, or the second frequency domain bandwidth.

In some embodiments, the at least one physical channel transmission is a repetition transmission of the same channel or the same transport block (TB). Alternatively, the at least one physical channel transmission is a single transmission of one channel or one TB. Alternatively, the at least one physical channel transmission is separate transmissions of different channels or different TBs. Alternatively, the at least one physical channel transmission is separate transmissions of different parts of the same TB.

In the technical solutions provided by the embodiments of the present disclosure, a terminal device receives first information, a first indication field in the first information indicates a frequency domain resource occupied by at least one physical channel transmission, and the at least one physical channel occupies the first type of time domain resource and/or the second type of time domain resource. This achieves indication of the frequency domain resource occupied by the at least one physical channel transmission by the first information. Further, in a case where at least one physical channel occupies the first type and the second type of time domain resources, by using the above method, frequency domain resources occupied by the physical channel transmissions in the two different types of time domain resources can be indicated by one indication information (that is, the first information).

It is to be noted that, in the above method embodiments, the operations executed by the terminal device may be individually implemented as a wireless communication method on the terminal device side; and the operations executed by the network device may be individually implemented as a wireless communication method on the network device side. For details not disclosed in an embodiment on any side, reference may be made to the embodiments on the other side.

FIG. 9 illustrates a block diagram of a wireless communication apparatus according to an embodiment of the present disclosure. The apparatus has a function of implementing the wireless communication method on the terminal device side. The function may be implemented by hardware, or may be implemented by hardware executing corresponding software. The apparatus may be the terminal device described above, or may be disposed in a terminal device. As illustrated in FIG. 9, the apparatus 900 may include a receiving module 910.

The receiving module 910 is configured to receive first information. The first information includes a first indication field, and the first indication field indicates a frequency domain resource occupied by at least one physical channel transmission. The at least one physical channel occupies a first type of time domain resource and/or a second type of time domain resource.

In some embodiments, the number of bits of the first indication field is determined based on a first frequency domain bandwidth.

In some embodiments, the lowest N bits or the highest N bits of the first indication field are used to indicate a frequency domain resource occupied by the at least one physical channel in the second type of time domain resource. N is determined according to a parameter associated with a second frequency domain bandwidth, and the second frequency domain bandwidth is a subset of the first frequency domain bandwidth. N is a positive integer.

In some embodiments, there is at least one transmission in the at least one physical channel that occupies the second type of time domain resource.

In some embodiments, the parameter associated with the second frequency domain bandwidth includes at least one of a size of the second frequency domain bandwidth or a granularity of frequency domain resource allocation corresponding to the second frequency domain bandwidth.

In some embodiments, a frequency domain resource occupied by the at least one physical channel in the first type of time domain resource is determined based on the frequency domain resource occupied by the at least one physical channel in the second type of time domain resource.

In some embodiments, a reference range of the frequency domain resource indicated by the lowest N bits or the highest N bits of the first indication field is: an RBG(s) associated with the second frequency domain bandwidth, where the RBG associated with the second frequency domain bandwidth is an RBG including at least X RBs belonging to the second frequency domain bandwidth, and X is a positive integer; or, all RBs included in the second frequency domain bandwidth.

In some embodiments, Q bits in the first indication field are used to indicate at least one of the following information: a frequency domain offset between a transmission occupying the first type of time domain resource and a transmission occupying the second type of time domain resource in the at least one physical channel; a first frequency hopping offset corresponding to the transmission occupying the first type of time domain resource in the at least one physical channel; or, a second frequency hopping offset corresponding to the transmission occupying the second type of time domain resource in the at least one physical channel. The Q bits are part or all of bits in the first indication field except the lowest N bits or the highest N bits, and Q is a positive integer.

In some embodiments, the frequency domain offset is an RB offset or an RBG offset. The RBG offset is determined based on an RBG associated with the first frequency domain bandwidth; or, the RBG offset is determined based on an RBG associated with the second frequency domain bandwidth; or, the RBG offset is determined based on a smaller one of the RBG associated with the first frequency domain bandwidth and the RBG associated with the second frequency domain bandwidth; or, the RBG offset is determined based on a greater one of the RBG associated with the first frequency domain bandwidth and the RBG associated with the second frequency domain bandwidth.

In some embodiments, a frequency domain resource of a transmission occupying the first type of time domain resource in the at least one physical channel is determined based on at least one of: a frequency domain resource occupied by the at least one physical channel in the second type of time domain resource, a frequency domain offset between the transmission occupying the first type of time domain resource and a transmission occupying the second type of time domain resource in the at least one physical channel, or a size of the first frequency domain bandwidth.

In some embodiments, an RB number of the transmission occupying the first type of time domain resource in the at least one physical channel is obtained by performing a modulo operation on a first intermediate value and the size of the first frequency domain bandwidth, where the first intermediate value is a sum of an RB number of the transmission occupying the second type of time domain resource in the at least one physical channel and the frequency domain offset; and/or, an RBG number occupied by the transmission occupying the first type of time domain resource in the at least one physical channel is obtained by performing a modulo operation on a second intermediate value and the number of RBGs included in the first frequency domain bandwidth, where the second intermediate value is a sum of an RBG number occupied by the transmission occupying the second type of time domain resource in the at least one physical channel and the frequency domain offset.

In some embodiments, the first frequency domain bandwidth is an active BWP.

In some embodiments, the second frequency domain bandwidth is: an uplink subband in an active BWP; or, a downlink subband in the active BWP; or, an uplink subband and a guard bandwidth in the active BWP; or, a downlink subband and a guard bandwidth in the active BWP.

In some embodiments, the lowest M bits or the highest M bits of the first indication field are used to indicate a frequency domain resource occupied by the at least one physical channel in the first type of time domain resource. M is determined according to a parameter associated with a first frequency domain bandwidth, and M is a positive integer.

In some embodiments, the at least one physical channel each occupies the first type of time domain resource.

In some embodiments, the parameter associated with the first frequency domain bandwidth includes at least one of a size of the first frequency domain bandwidth or a granularity of frequency domain resource allocation corresponding to the first frequency domain bandwidth.

In some embodiments, R bits in the first indication field are used to indicate a first frequency hopping offset, and S bits in the first indication field are used to indicate a second frequency hopping offset. R is a positive integer, and S is a positive integer. The first frequency hopping offset corresponds to a transmission occupying the first type of time domain resource in the at least one physical channel. The second frequency hopping offset corresponds to a transmission occupying the second type of time domain resource in the at least one physical channel.

In some embodiments, T bits in the first indication field are used to indicate a first frequency hopping offset and a second frequency hopping offset, and T is a positive integer. The first frequency hopping offset corresponds to a transmission occupying the first type of time domain resource in the at least one physical channel. The second frequency hopping offset corresponds to a transmission occupying the second type of time domain resource in the at least one physical channel.

In some embodiments, the first frequency hopping offset is determined from a first frequency hopping offset list, and the second frequency hopping offset is determined from a second frequency hopping offset list. The first frequency hopping offset list includes at least one frequency hopping offset configured for the first type of time domain resource. The second frequency hopping offset list includes at least one frequency hopping offset configured for the second type of time domain resource.

In some embodiments, the number of frequency hopping offsets included in the second frequency hopping offset list is determined according to a first frequency domain bandwidth that is an active BWP. Alternatively, the number of frequency hopping offsets included in the second frequency hopping offset list is determined according to a second frequency domain bandwidth, and the second frequency domain bandwidth is a subset of the first frequency domain bandwidth.

In some embodiments, the first frequency hopping offset and the second frequency hopping offset are determined from the same frequency hopping offset list, and the frequency hopping offset list includes at least one frequency hopping offset.

In some embodiments, for a transmission occupying the first type of time domain resource in the at least one physical channel, a starting RB number is determined according to at least one of a starting RB number corresponding to a frequency domain resource occupied by the at least one physical channel in the first type of time domain resource, the first frequency hopping offset, or the first frequency domain bandwidth; and/or, for a transmission occupying the second type of time domain resource in the at least one physical channel, a starting RB number is determined according to at least one of a starting RB number corresponding to a frequency domain resource occupied by the at least one physical channel in the second type of time domain resource, the second frequency hopping offset, or the second frequency domain bandwidth.

In some embodiments, the at least one physical channel transmission is a repetition transmission of the same channel or the same TB; or, the at least one physical channel transmission is a single transmission of one channel or one TB; or, the at least one physical channel transmission is separate transmissions of different channels or different TBs; or, the at least one physical channel transmission is separate transmissions of different parts of the same TB.

In some embodiments, the first type refers to a time domain resource type that does not include an uplink subband or a downlink subband, and the second type refers to a time domain resource type that includes an uplink subband or a downlink subband.

FIG. 10 illustrates a block diagram of a wireless communication apparatus according to another embodiment of the present disclosure. The apparatus has a function of implementing the wireless communication method on the network device side. The function may be implemented by hardware, or may be implemented by hardware executing corresponding software. The apparatus may be the network device described above, or may be disposed in a network device. As illustrated in FIG. 10, the apparatus 1000 may include a transmitting module 1010.

The transmitting module 1010 is configured to transmit first information. The first information includes a first indication field, and the first indication field indicates a frequency domain resource occupied by at least one physical channel transmission. The at least one physical channel occupies a first type of time domain resource and/or a second type of time domain resource.

In some embodiments, the number of bits of the first indication field is determined based on a first frequency domain bandwidth.

In some embodiments, the lowest N bits or the highest N bits of the first indication field are used to indicate a frequency domain resource occupied by the at least one physical channel in the second type of time domain resource. N is determined according to a parameter associated with a second frequency domain bandwidth, and the second frequency domain bandwidth is a subset of the first frequency domain bandwidth. N is a positive integer.

In some embodiments, there is at least one transmission in the at least one physical channel that occupies the second type of time domain resource.

In some embodiments, the parameter associated with the second frequency domain bandwidth includes at least one of a size of the second frequency domain bandwidth or a granularity of frequency domain resource allocation corresponding to the second frequency domain bandwidth.

In some embodiments, a frequency domain resource occupied by the at least one physical channel in the first type of time domain resource is determined based on the frequency domain resource occupied by the at least one physical channel in the second type of time domain resource.

In some embodiments, a reference range of the frequency domain resource indicated by the lowest N bits or the highest N bits of the first indication field is: an RBG(s) associated with the second frequency domain bandwidth, where the RBG associated with the second frequency domain bandwidth is an RBG including at least X RBs belonging to the second frequency domain bandwidth, and X is a positive integer; or, all RBs included in the second frequency domain bandwidth.

In some embodiments, Q bits in the first indication field are used to indicate at least one of the following information: a frequency domain offset between a transmission occupying the first type of time domain resource and a transmission occupying the second type of time domain resource in the at least one physical channel; a first frequency hopping offset corresponding to the transmission occupying the first type of time domain resource in the at least one physical channel; or, a second frequency hopping offset corresponding to the transmission occupying the second type of time domain resource in the at least one physical channel. The Q bits are part or all of bits in the first indication field except the lowest N bits or the highest N bits, and Q is a positive integer.

In some embodiments, the frequency domain offset is an RB offset or an RBG offset. The RBG offset is determined based on an RBG associated with the first frequency domain bandwidth; or, the RBG offset is determined based on an RBG associated with the second frequency domain bandwidth; or, the RBG offset is determined based on a smaller one of the RBG associated with the first frequency domain bandwidth and the RBG associated with the second frequency domain bandwidth; or, the RBG offset is determined based on a greater one of the RBG associated with the first frequency domain bandwidth and the RBG associated with the second frequency domain bandwidth.

In some embodiments, a frequency domain resource of a transmission occupying the first type of time domain resource in the at least one physical channel is determined based on at least one of: a frequency domain resource occupied by the at least one physical channel in the second type of time domain resource, a frequency domain offset between the transmission occupying the first type of time domain resource and a transmission occupying the second type of time domain resource in the at least one physical channel, or a size of the first frequency domain bandwidth.

In some embodiments, an RB number of the transmission occupying the first type of time domain resource in the at least one physical channel is obtained by performing a modulo operation on a first intermediate value and the size of the first frequency domain bandwidth, where the first intermediate value is a sum of an RB number of the transmission occupying the second type of time domain resource in the at least one physical channel and the frequency domain offset; and/or, an RBG number occupied by the transmission occupying the first type of time domain resource in the at least one physical channel is obtained by performing a modulo operation on a second intermediate value and the number of RBGs included in the first frequency domain bandwidth, where the second intermediate value is a sum of an RBG number occupied by the transmission occupying the second type of time domain resource in the at least one physical channel and the frequency domain offset.

In some embodiments, the first frequency domain bandwidth is an active BWP.

In some embodiments, the second frequency domain bandwidth is: an uplink subband in an active BWP; or, a downlink subband in the active BWP; or, an uplink subband and a guard bandwidth in the active BWP; or, a downlink subband and a guard bandwidth in the active BWP.

In some embodiments, the lowest M bits or the highest M bits of the first indication field are used to indicate a frequency domain resource occupied by the at least one physical channel in the first type of time domain resource. M is determined according to a parameter associated with a first frequency domain bandwidth, and M is a positive integer.

In some embodiments, the at least one physical channel each occupies the first type of time domain resource.

In some embodiments, the parameter associated with the first frequency domain bandwidth includes at least one of a size of the first frequency domain bandwidth or a granularity of frequency domain resource allocation corresponding to the first frequency domain bandwidth.

In some embodiments, R bits in the first indication field are used to indicate a first frequency hopping offset, and S bits in the first indication field are used to indicate a second frequency hopping offset. R is a positive integer, and S is a positive integer. The first frequency hopping offset corresponds to a transmission occupying the first type of time domain resource in the at least one physical channel. The second frequency hopping offset corresponds to a transmission occupying the second type of time domain resource in the at least one physical channel.

In some embodiments, T bits in the first indication field are used to indicate a first frequency hopping offset and a second frequency hopping offset, and T is a positive integer. The first frequency hopping offset corresponds to a transmission occupying the first type of time domain resource in the at least one physical channel. The second frequency hopping offset corresponds to a transmission occupying the second type of time domain resource in the at least one physical channel.

In some embodiments, the first frequency hopping offset is determined from a first frequency hopping offset list, and the second frequency hopping offset is determined from a second frequency hopping offset list. The first frequency hopping offset list includes at least one frequency hopping offset configured for the first type of time domain resource. The second frequency hopping offset list includes at least one frequency hopping offset configured for the second type of time domain resource.

In some embodiments, the number of frequency hopping offsets included in the second frequency hopping offset list is determined according to a first frequency domain bandwidth that is an active BWP. Alternatively, the number of frequency hopping offsets included in the second frequency hopping offset list is determined according to a second frequency domain bandwidth, and the second frequency domain bandwidth is a subset of the first frequency domain bandwidth.

In some embodiments, the first frequency hopping offset and the second frequency hopping offset are determined from the same frequency hopping offset list, and the frequency hopping offset list includes at least one frequency hopping offset.

In some embodiments, for a transmission occupying the first type of time domain resource in the at least one physical channel, a starting RB number is determined according to at least one of a starting RB number corresponding to a frequency domain resource occupied by the at least one physical channel in the first type of time domain resource, the first frequency hopping offset, or the first frequency domain bandwidth; and/or, for a transmission occupying the second type of time domain resource in the at least one physical channel, a starting RB number is determined according to at least one of a starting RB number corresponding to a frequency domain resource occupied by the at least one physical channel in the second type of time domain resource, the second frequency hopping offset, or the second frequency domain bandwidth.

In some embodiments, the at least one physical channel transmission is a repetition transmission of the same channel or the same TB; or, the at least one physical channel transmission is a single transmission of one channel or one TB; or, the at least one physical channel transmission is separate transmissions of different channels or different TBs; or, the at least one physical channel transmission is separate transmissions of different parts of the same TB.

In some embodiments, the first type refers to a time domain resource type that does not include an uplink subband or a downlink subband, and the second type refers to a time domain resource type that includes an uplink subband or a downlink subband.

FIG. 11 illustrates a schematic structural diagram of a terminal device according to an embodiment of the present disclosure. The terminal device 1100 may be configured to perform the method operations performed by the terminal device in the above embodiments. The terminal device 1100 may include a processor 1101, a transceiver 1102, and a memory 1103. The processor 1101 may be configured to control transmission and/or reception. The transceiver 1102 may be configured to implement the functions of transmission and/or reception, such as the functions of the receiving module 910 described above.

The processor 1101 includes one or more processing cores, and the processor 1101 executes various functional applications and information processing by running software programs and modules.

The transceiver 1102 may include a receiver and a transmitter. For example, the receiver and the transmitter may be implemented as the same wireless communication component, which may include a wireless communication chip and a radio frequency antenna.

The memory 1103 may be coupled to the processor 1101 and the transceiver 1102.

The memory 1103 may be configured to store a computer program executed by a processor. The processor 901 is configured to execute the computer program to implement various operations in the above method embodiments.

Furthermore, the memory 1103 may be implemented by any type of volatile or non-volatile storage devices or a combination thereof. The volatile or non-volatile storage devices include, but are not limited to, a magnetic or optical disk, an electrically erasable programmable read-only memory (EEPROM), an erasable programmable read-only memory (EPROM), a static random access memory (SRAM), a read-only memory (ROM), a magnetic memory, a flash memory, and a programmable read-only memory (PROM).

In some embodiments, the transceiver 1101 is configured to receive first information. The first information includes a first indication field for indicating a frequency domain resource occupied by at least one physical channel transmission. The at least one physical channel occupies a first type of time domain resource and/or a second type of time domain resource.

For details not described in detail in this embodiment, reference may be made to the above embodiments, which will not be elaborated herein.

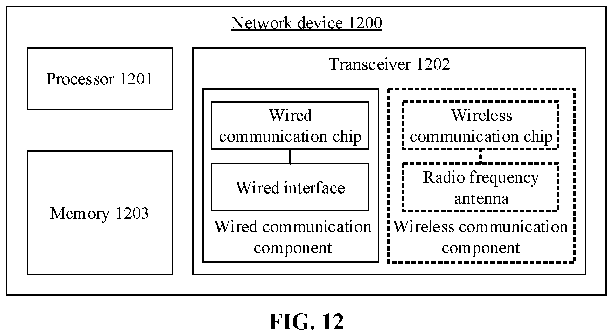

FIG. 12 illustrates a schematic structural diagram of a network device according to an embodiment of the present disclosure. The network device 1200 may be configured to perform the method operations performed by the network device in the above embodiments. The network device 1200 may include a processor 1201, a transceiver 1202, and a memory 1203. The processor 1201 may be configured to control transmission and/or reception. The transceiver 1202 may be configured to implement the functions of transmission and/or reception, such as the functions of the transmitting module 1010 described above.

The processor 1201 includes one or more processing cores, and the processor 1201 executes various functional applications and information processing by running software programs and modules.

The transceiver 1202 may include a receiver and a transmitter. For example, the transceiver 1202 may include a wired communication component, which may include a wired communication chip and a wired interface (such as, an optical fiber interface). In an embodiment, the transceiver 1202 may also include a wireless communication component, which may include a wireless communication chip and a radio frequency antenna.

The memory 1203 may be coupled to the processor 1201 and the transceiver 1202.

The memory 1203 may be configured to store a computer program executed by a processor. The processor 1201 is configured to execute the computer program to implement various operations executed by the network device in the above method embodiments.

Further, the memory 1203 may be implemented by any type of volatile or non-volatile storage devices or a combination thereof. The volatile or non-volatile storage devices include, but are not limited to, a magnetic or optical disk, an EEPROM, an EPROM, an SRAM, an ROM, a magnetic memory, a flash memory, and a PROM.

In some embodiments, the transceiver 1202 is configured to transmit first information. The first information includes a first indication field for indicating a frequency domain resource occupied by at least one physical channel transmission. The at least one physical channel occupies a first type of time domain resource and/or a second type of time domain resource.

For details not described in detail in this embodiment, reference may be made to the above embodiments, which will not be elaborated herein.

The embodiments of the present disclosure further provide a computer-readable storage medium having a computer program stored therein. The computer program is used to be executed by a processor to implement the wireless communication method on the terminal device side described above, or implement the wireless communication method on the network device side described above. In some embodiments, the computer-readable storage medium may include: a read-only memory (ROM), a random-access memory (RAM), a solid state drive (SSD), an optical disc, or the like. The RAM may include a resistance random access memory (ReRAM) and a dynamic random access memory (DRAM).

The embodiments of the present disclosure further provide a chip. The chip includes programmable logic circuitry and/or program instructions, and when the chip is operating, the chip is used to implement the wireless communication method on the terminal device side described above, or implement the wireless communication method on the network device side described above.

The embodiments of the present disclosure further provide a computer program product. The computer program product includes a computer program stored in a computer-readable storage medium, and a processor reads and executes the computer program from the computer-readable storage medium to implement the wireless communication method on the terminal device side described above, or implement the wireless communication method on the network device side described above.

It should be understood that the term "indication" mentioned in the embodiments of the present disclosure may be a direct indication, an indirect indication, or an indication of an associated relationship. For example, an indication of B by A may indicate that A directly indicates B, for example, B is obtained through A, or that A indirectly indicates B, for example, A indicates C and B is obtained through C, or that there is an association between A and B.

In the description of the embodiments of the present disclosure, the term "correspondence" may indicate that there is a direct correspondence or indirect correspondence between two elements, or may indicate that there is an association relationship between the two elements, or may indicate a relationship between indicating and being indicated, or between configuring and being configured, etc.

In some embodiments of the present disclosure, "predefined" may be implemented by pre-storing the corresponding codes, tables, or other manners for indicating relevant information in the device (for example, including a terminal device and a network device), and the specific implementations thereof are not limited in the present disclosure. For example, "predefined" may refer to those defined in a protocol.

In some embodiments of the present disclosure, the "protocol" may refer to a standard protocol in the field of communication, which may include, for example, an LTE protocol, a NR protocol and relevant protocol applied in the future communication system, which is not limited in the present disclosure.

The term "a plurality/multiple" mentioned in the present disclosure refers to two or more. The term "and/or" describes an association relationship of associated objects and represents three relationships. For example, A and/or B may represent the following three cases: independent existence of A, existence of both A and B, and independent existence of B. The character "/" generally represents that previous and next associated objects form an "or" relationship.

In the present disclosure, "greater than or equal to" may represent greater than or equal to or greater than, and "less than or equal to" may represent less than or equal to or less than.

In addition, the numbering of the operations described herein only exemplifies a possible sequence of execution between the operations. In some other embodiments, the above operations may also be performed in a different numbering sequence; for example, two different numbered operations are performed simultaneously, or, two different numbered operations are performed in the reverse sequence to the illustration, which will not be limited by the embodiments of the present disclosure.

Those skilled in the art will appreciate that, in one or more of the aforementioned examples, the functions described in the embodiments of the present disclosure may be implemented in hardware, software, firmware or any combination thereof. When being implemented in the software, these functions may be stored in a computer-readable medium or transmitted as one or more instructions or codes on the computer-readable medium. The computer-readable medium includes a computer storage medium and a communication medium, where the communication medium includes any medium that facilitates the transfer of the computer program from one place to another place. The storage medium may be any available medium accessible to a general-purpose computer or a special-purpose computer.

The above description is only exemplary embodiments of the present disclosure and is not intended to limit the present disclosure. Any modification, equivalent replacement, improvement, etc. made within the spirit and principles of the present disclosure shall be included in the scope of protection of the present disclosure.

## Claims

1. A wireless communication method, performed by a terminal device, the method comprising:
receiving first information, the first information comprising a first indication field for indicating a frequency domain resource occupied by at least one physical channel transmission;
wherein at least one physical channel occupies a first type of time domain resource and/or a second type of time domain resource.

2. The method of claim 1, wherein a number of bits of the first indication field is determined based on a first frequency domain bandwidth.

3. The method of claim 1 or 2, wherein the lowest N bits or the highest N bits of the first indication field are used to indicate a frequency domain resource occupied by the at least one physical channel in the second type of time domain resource, N being determined according to a parameter associated with a second frequency domain bandwidth, the second frequency domain bandwidth being a subset of the first frequency domain bandwidth, and N being a positive integer.

4. The method of claim 3, wherein there is at least one transmission in the at least one physical channel that occupies the second type of time domain resource.

5. The method of claim 3 or 4, wherein the parameter associated with the second frequency domain bandwidth comprises at least one of a size of the second frequency domain bandwidth or a granularity of frequency domain resource allocation corresponding to the second frequency domain bandwidth.

6. The method of any one of claims 3 to 5, wherein a frequency domain resource occupied by the at least one physical channel in the first type of time domain resource is determined based on the frequency domain resource occupied by the at least one physical channel in the second type of time domain resource.

7. The method of any one of claims 3 to 6, wherein a reference range of the frequency domain resource indicated by the lowest N bits or the highest N bits of the first indication field is:
a resource block group, RBG, associated with the second frequency domain bandwidth, wherein the RBG associated with the second frequency domain bandwidth is an RBG comprising at least X resource blocks, RBs, belonging to the second frequency domain bandwidth, X being a positive integer; or
all RBs comprised in the second frequency domain bandwidth.

8. The method of any one of claims 3 to 7, wherein Q bits in the first indication field are used to indicate at least one of the following:
a frequency domain offset between a transmission occupying the first type of time domain resource and a transmission occupying the second type of time domain resource in the at least one physical channel;
a first frequency hopping offset corresponding to the transmission occupying the first type of time domain resource in the at least one physical channel; or
a second frequency hopping offset corresponding to the transmission occupying the second type of time domain resource in the at least one physical channel;
wherein the Q bits are part or all of bits in the first indication field except the lowest N bits or the highest N bits, and Q is a positive integer.

9. The method of claim 8, wherein the frequency domain offset is an RB offset or an RBG offset;
the RBG offset is determined based on an RBG associated with the first frequency domain bandwidth; or,
the RBG offset is determined based on an RBG associated with the second frequency domain bandwidth; or,
the RBG offset is determined based on a smaller one of the RBG associated with the first frequency domain bandwidth and the RBG associated with the second frequency domain bandwidth; or,
the RBG offset is determined based on a larger one of the RBG associated with the first frequency domain bandwidth and the RBG associated with the second frequency domain bandwidth.

10. The method of claim 6, wherein a frequency domain resource of a transmission occupying the first type of time domain resource in the at least one physical channel is determined based on at least one of: the frequency domain resource occupied by the at least one physical channel in the second type of time domain resource, a frequency domain offset between the transmission occupying the first type of time domain resource and a transmission occupying the second type of time domain resource in the at least one physical channel, or a size of the first frequency domain bandwidth.

11. The method of claim 10, wherein
an RB number of the transmission occupying the first type of time domain resource in the at least one physical channel is obtained by performing a modulo operation on a first intermediate value and the size of the first frequency domain bandwidth, the first intermediate value being a sum of an RB number of the transmission occupying the second type of time domain resource in the at least one physical channel and the frequency domain offset; and/or,
an RBG number occupied by the transmission occupying the first type of time domain resource in the at least one physical channel is obtained by performing a modulo operation on a second intermediate value and a number of RBGs comprised in the first frequency domain bandwidth, the second intermediate value being a sum of an RBG number occupied by the transmission occupying the second type of time domain resource in the at least one physical channel and the frequency domain offset.

12. The method of any one of claims 2 to 11, wherein the first frequency domain bandwidth is an active bandwidth part, BWP.

13. The method of any one of claims 3 to 12, wherein the second frequency domain bandwidth is:
an uplink subband in an active BWP; or,
a downlink subband in the active BWP; or,
an uplink subband and a guard bandwidth in the active BWP; or,
a downlink subband and a guard bandwidth in the active BWP.

14. The method of claim 1, wherein the lowest M bits or the highest M bits of the first indication field are used to indicate a frequency domain resource occupied by the at least one physical channel in the first type of time domain resource, M being determined according to a parameter associated with a first frequency domain bandwidth, and M being a positive integer.

15. The method of claim 14, wherein each of the at least one physical channel occupies the first type of time domain resource.

16. The method of claim 14 or 15, wherein the parameter associated with the first frequency domain bandwidth comprises at least one of a size of the first frequency domain bandwidth or a granularity of frequency domain resource allocation corresponding to the first frequency domain bandwidth.

17. The method of any one of claims 1 to 16, wherein R bits in the first indication field are used to indicate a first frequency hopping offset, and S bits in the first indication field are used to indicate a second frequency hopping offset, R is a positive integer and S is a positive integer;
the first frequency hopping offset corresponds to a transmission occupying the first type of time domain resource in the at least one physical channel; and
the second frequency hopping offset corresponds to a transmission occupying the second type of time domain resource in the at least one physical channel.

18. The method of any one of claims 1 to 16, wherein T bits in the first indication field are used to indicate a first frequency hopping offset and a second frequency hopping offset, T being a positive integer;
the first frequency hopping offset corresponds to a transmission occupying the first type of time domain resource in the at least one physical channel; and
the second frequency hopping offset corresponds to a transmission occupying the second type of time domain resource in the at least one physical channel.

19. The method of claim 17 or 18, wherein the first frequency hopping offset is determined from a first frequency hopping offset list, and the second frequency hopping offset is determined from a second frequency hopping offset list;
the first frequency hopping offset list comprises at least one frequency hopping offset configured for the first type of time domain resource; and
the second frequency hopping offset list comprises at least one frequency hopping offset configured for the second type of time domain resource.

20. The method of claim 19, wherein
a number of frequency hopping offsets comprised in the second frequency hopping offset list is determined according to a first frequency domain bandwidth, the first frequency domain bandwidth being an active BWP; or,
a number of frequency hopping offsets comprised in the second frequency hopping offset list is determined from a second frequency domain bandwidth, the second frequency domain bandwidth being a subset of the first frequency domain bandwidth.

21. The method of claim 17 or 18, wherein the first frequency hopping offset and the second frequency hopping offset are determined from a same frequency hopping offset list, and the frequency hopping offset list comprises at least one frequency hopping offset.

22. The method of any one of claims 17 to 21, wherein
a starting RB for the transmission occupying the first type of time domain resource in the at least one physical channel is determined according to at least one of a starting RB corresponding to a frequency domain resource occupied by the at least one physical channel in the first type of time domain resource, the first frequency hopping offset, or a first frequency domain bandwidth; and/or,
a starting RB for the transmission occupying the second type of time domain resource in the at least one physical channel is determined according to at least one of a starting RB corresponding to a frequency domain resource occupied by the at least one physical channel in the second type of time domain resource, the second frequency hopping offset, or a second frequency domain bandwidth.

23. The method of any one of claims 1 to 22, wherein
the at least one physical channel transmission is a repetition transmission of a same channel or a same transport block, TB; or,
the at least one physical channel transmission is a single transmission of one channel or one TB; or,
the at least one physical channel transmission is separate transmissions of different channels or different TBs; or,
the at least one physical channel transmission is separate transmissions of different parts of a same TB.

24. The method of any one of claims 1 to 23, wherein the first type refers to a time domain resource type that does not include an uplink subband or a downlink subband, and the second type refers to a time domain resource type that includes an uplink subband or a downlink subband.

25. A wireless communication method, performed by a network device, the method comprising:
transmitting first information, the first information comprising a first indication field for indicating a frequency domain resource occupied by at least one physical channel transmission;
wherein at least one physical channel occupies a first type of time domain resource and/or a second type of time domain resource.

26. The method of claim 25, wherein a number of bits of the first indication field is determined based on a first frequency domain bandwidth.

27. The method of claim 25 or 26, wherein the lowest N bits or the highest N bits of the first indication field are used to indicate a frequency domain resource occupied by the at least one physical channel in the second type of time domain resource, N being determined according to a parameter associated with a second frequency domain bandwidth, the second frequency domain bandwidth being a subset of the first frequency domain bandwidth, and N being a positive integer.

28. The method of claim 27, wherein there is at least one transmission in the at least one physical channel that occupies the second type of time domain resource.

29. The method of claim 27 or 28, wherein the parameter associated with the second frequency domain bandwidth comprises at least one of a size of the second frequency domain bandwidth or a granularity of frequency domain resource allocation corresponding to the second frequency domain bandwidth.

30. The method of any one of claims 27 to 29, wherein a frequency domain resource occupied by the at least one physical channel in the first type of time domain resource is determined based on the frequency domain resource occupied by the at least one physical channel in the second type of time domain resource.

31. The method according to any one of claims 27 to 30, wherein a reference range of the frequency domain resource indicated by the lowest N bits or the highest N bits of the first indication field is:
a resource block group, RBG, associated with the second frequency domain bandwidth, wherein the RBG associated with the second frequency domain bandwidth is an RBG comprising at least X resource blocks, RBs, belonging to the second frequency domain bandwidth, X being a positive integer; or
all RBs comprised in the second frequency domain bandwidth.

32. The method of any one of claims 27 to 31, wherein Q bits in the first indication field are used to indicate at least one of the following:
a frequency domain offset between a transmission occupying the first type of time domain resource and a transmission occupying the second type of time domain resource in the at least one physical channel;
a first frequency hopping offset corresponding to the transmission occupying the first type of time domain resource in the at least one physical channel; or
a second frequency hopping offset corresponding to the transmission occupying the second type of time domain resource in the at least one physical channel;
wherein the Q bits are part or all of bits in the first indication field except the lowest N bits or the highest N bits, and Q is a positive integer.

33. The method of claim 32, wherein the frequency domain offset is an RB offset or an RBG offset;
the RBG offset is determined based on an RBG associated with the first frequency domain bandwidth; or,
the RBG offset is determined based on an RBG associated with the second frequency domain bandwidth; or,
the RBG offset is determined based on a smaller one of the RBG associated with the first frequency domain bandwidth and the RBG associated with the second frequency domain bandwidth; or,
the RBG offset is determined based on a larger one of the RBG associated with the first frequency domain bandwidth and the RBG associated with the second frequency domain bandwidth.

34. The method of claim 30, wherein a frequency domain resource of a transmission occupying the first type of time domain resource in the at least one physical channel is determined based on at least one of: the frequency domain resource occupied by the at least one physical channel in the second type of time domain resource, a frequency domain offset between the transmission occupying the first type of time domain resource and a transmission occupying the second type of time domain resource in the at least one physical channel, or a size of the first frequency domain bandwidth.

35. The method of claim 34, wherein
an RB number of the transmission occupying the first type of time domain resource in the at least one physical channel is obtained by performing a modulo operation on a first intermediate value and the size of the first frequency domain bandwidth, the first intermediate value being a sum of an RB number of the transmission occupying the second type of time domain resource in the at least one physical channel and the frequency domain offset; and/or,
an RBG number occupied by the transmission occupying the first type of time domain resource in the at least one physical channel is obtained by performing a modulo operation on a second intermediate value and a number of RBGs comprised in the first frequency domain bandwidth, the second intermediate value being a sum of an RBG number occupied by the transmission occupying the second type of time domain resource in the at least one physical channel and the frequency domain offset.

36. The method of any one of claims 26 to 35, wherein the first frequency domain bandwidth is an active bandwidth part, BWP.

37. The method of any one of claims 27 to 36, wherein the second frequency domain bandwidth is:
an uplink subband in an active BWP; or,
a downlink subband in the active BWP; or,
an uplink subband and a guard bandwidth in the active BWP; or,
a downlink subband and a guard bandwidth in the active BWP.

38. The method of claim 25, wherein the lowest M bits or the highest M bits of the first indication field are used to indicate a frequency domain resource occupied by the at least one physical channel in the first type of time domain resource, M being determined according to a parameter associated with a first frequency domain bandwidth, and M being a positive integer.

39. The method of claim 38, wherein each of the at least one physical channel occupies the first type of time domain resource.

40. The method of claim 38 or 39, wherein the parameter associated with the first frequency domain bandwidth comprises at least one of a size of the first frequency domain bandwidth or a granularity of frequency domain resource allocation corresponding to the first frequency domain bandwidth.

41. The method of any one of claims 25 to 40, wherein R bits in the first indication field are used to indicate a first frequency hopping offset, and S bits in the first indication field are used to indicate a second frequency hopping offset, R is a positive integer and S is a positive integer;
the first frequency hopping offset corresponds to a transmission occupying the first type of time domain resource in the at least one physical channel; and
the second frequency hopping offset corresponds to a transmission occupying the second type of time domain resource in the at least one physical channel.

42. The method of any one of claims 25 to 40, wherein T bits in the first indication field are used to indicate a first frequency hopping offset and a second frequency hopping offset, T being a positive integer;
the first frequency hopping offset corresponds to a transmission occupying the first type of time domain resource in the at least one physical channel; and
the second frequency hopping offset corresponds to a transmission occupying the second type of time domain resource in the at least one physical channel.

43. The method of claim 41 or 42, wherein the first frequency hopping offset is determined from a first frequency hopping offset list, and the second frequency hopping offset is determined from a second frequency hopping offset list;
the first frequency hopping offset list comprises at least one frequency hopping offset configured for the first type of time domain resource; and
the second frequency hopping offset list comprises at least one frequency hopping offset configured for the second type of time domain resource.

44. The method of claim 43, wherein
a number of frequency hopping offsets comprised in the second frequency hopping offset list is determined according to a first frequency domain bandwidth, the first frequency domain bandwidth being an active BWP; or,
a number of frequency hopping offsets comprised in the second frequency hopping offset list is determined from a second frequency domain bandwidth, the second frequency domain bandwidth being a subset of the first frequency domain bandwidth.

45. The method of claim 41 or 42, wherein the first frequency hopping offset and the second frequency hopping offset are determined from a same frequency hopping offset list, and the frequency hopping offset list comprises at least one frequency hopping offset.

46. The method of any one of claims 41 to 45, wherein
a starting RB for the transmission occupying the first type of time domain resource in the at least one physical channel is determined according to at least one of a starting RB corresponding to a frequency domain resource occupied by the at least one physical channel in the first type of time domain resource, the first frequency hopping offset, or a first frequency domain bandwidth; and/or,
a starting RB for the transmission occupying the second type of time domain resource in the at least one physical channel is determined according to at least one of a starting RB corresponding to a frequency domain resource occupied by the at least one physical channel in the second type of time domain resource, the second frequency hopping offset, or a second frequency domain bandwidth.

47. The method of any one of claims 25 to 46, wherein
the at least one physical channel transmission is a repetition transmission of a same channel or a same transport block, TB; or,
the at least one physical channel transmission is a single transmission of one channel or one TB; or,
the at least one physical channel transmission is separate transmissions of different channels or different TBs; or,
the at least one physical channel transmission is separate transmissions of different parts of a same TB.

48. The method of any one of claims 25 to 47, wherein the first type refers to a time domain resource type that does not include an uplink subband or a downlink subband, and the second type refers to a time domain resource type that includes an uplink subband or a downlink subband.

49. An apparatus for wireless communication, comprising:
a receiving module, configured to receive first information, the first information comprising a first indication field for indicating a frequency domain resource occupied by at least one physical channel transmission;
wherein at least one physical channel occupies a first type of time domain resource and/or a second type of time domain resource.

50. An apparatus for wireless communication, comprising:
a transmitting module, configured to transmit first information, the first information comprising a first indication field for indicating a frequency domain resource occupied by at least one physical channel transmission;
wherein at least one physical channel occupies a first type of time domain resource and/or a second type of time domain resource.

51. A communication device, comprising a processor and a memory for storing a computer program, wherein the processor executes the computer program to implement the method according to any one of claims 1 to 24, or implement the method according to any one of claims 25 to 48.

52. A computer-readable storage medium having stored a computer program thereon, the computer program being executed by a processor to implement the method according to any one of claims 1 to 24, or implement the method according to any one of claims 25 to 48.

53. A chip, comprising programmable logic circuitry and/or program instructions, wherein the chip is configured for implementing the method according to any one of claims 1 to 24, or implementing the method according to any one of claims 25 to 48 when being in operation.

54. A computer program product, comprising computer instructions stored in a computer-readable storage medium, wherein a processor reads and executes the computer instructions from the computer-readable storage medium to implement the method of any one of claims 1 to 24, or implement the method of any one of claims 25 to 48.
